# EUROPEAN PATENT APPLICATION

(11) **EP 4 718 928 A1**
(43) Date of publication of application: **01.04.2026**
(21) Application number: 24838426.5
(22) Date of filing: 13.05.2024
(51) Int. Cl.: H04W 72/0453

(54) **COMMUNICATION METHOD AND APPARATUS**

(30) Priority: 07.07.2023 CN 202310834174
(71) Applicant: Huawei Technologies Co., Ltd., Shenzhen, Guangdong 518129 (CN)
(72) Inventor: ZHANG, Liwen, Shenzhen, Guangdong 518129 (CN); YANG, Lunle, Shenzhen, Guangdong 518129 (CN); XU, Hao, Shenzhen, Guangdong 518129 (CN); QIN, Huazhong, Shenzhen, Guangdong 518129 (CN)
(74) Representative: Goddar, Heinz J.
(86) International application number: PCT/CN2024/092902
(87) International publication number: WO 2025/011167

(57) **Abstract**

A communication method and apparatus, relating to the field of communication technologies, are provided, to improve uplink throughput rates of a cell and a user, and further improve resource utilization. In this application, the method includes: An access network device determines a band of a second cell that can be used as an SUL band of a first UE; and the access network device sends scheduling information to the first UE, where the scheduling information indicates the first UE to send uplink information on the band of the second cell in an SUL communication manner, where a serving cell of the first UE is a first cell, the second cell is a neighboring cell of the first cell, and the band of the second cell is a TDD band or an FDD band.

## Description

### CROSS-REFERENCE TO RELATED APPLICATIONS

This application claims priority to Chinese Patent Application No. 202310834174.7, filed with the China National Intellectual Property Administration on July 7, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A supplementary uplink (supplementary uplink, SUL) technology refers to configuring an SUL carrier in a new radio (new radio, NR) cell to improve uplink throughput rates of the cell and a user. The SUL carrier is paired with a downlink carrier for use, and belongs to a band of a cell corresponding to the downlink carrier. After an SUL carrier is configured for a cell, the cell corresponds to two uplink carriers: SUL carrier and normal uplink/non-SUL (normal uplink/non-supplementary uplink, NUL) carrier. In this way, a user equipment (user equipment, UE) may send uplink information to an access network device through the SUL carrier and the NUL carrier.

Currently, bands (denoted as SUL bands) of SUL carriers that are defined in the 3rd generation partnership project (the 3rd generation partnership project, 3GPP) protocol are limited, and when the access network device schedules the UE to transmit the uplink information on the SUL band, selection can be performed only from the bands configured as the SUL bands. When the SUL bands are busy, it is difficult for the access network device to further improve the uplink throughput rate by using the SUL technology. In addition, when utilization of a non-SUL band is lower than that of the SUL band, resource utilization in a communication system is low.

### SUMMARY

This application provides a communication method and apparatus, to enable a time division duplex (time division duplex, TDD) band or a frequency division duplex (time division duplexing, FDD) band defined in the 3GPP protocol to be used in an SUL communication manner, to further improve uplink throughput rates of a cell and a user, and improve resource utilization in a communication system.

According to a first aspect, this application provides a communication method. The communication method may be performed by an access network device or a module (for example, a chip or a circuit) in the access network device. The following provides descriptions by using an example in which the method is performed by the access network device.

The access network device determines a band of a second cell that can be used as an SUL band of a first UE; and the access network device sends scheduling information to the first UE, where the scheduling information indicates the first UE to send uplink information on the band of the second cell in an SUL communication manner. A serving cell of the first UE is a first cell, the second cell is a neighboring cell of the first cell, and the band of the second cell is a TDD band or an FDD band. The scheduling information may be specifically downlink control information (downlink control information, DCI) carried on a physical downlink control channel (physical downlink control channel, PDCCH).

In the foregoing technical solution, the access network device uses the band of the neighboring cell of the serving cell in which the first UE is located as the SUL band of the first UE, where the band of the neighboring cell may be the TDD band or the FDD band; and the access network device can schedule the first UE to send the uplink information on the band of the second cell in the SUL communication manner. This helps resolve a problem that there are SUL bands of a small quantity defined in the 3GPP protocol. Further, this helps improve uplink throughput rates of a cell and a user, and improve resource utilization in a communication system.

In a possible implementation, that the access network device determines the band of the second cell that can be used as the SUL band of the first UE may be specifically: The access network device determines the band of the second cell based on a band of the first cell and a correspondence between the band of the first cell and the band of the second cell. The access network device broadcasts the band of the second cell in the first cell. Correspondingly, the access network device receives capability information from the first UE, where the capability information indicates that the first UE supports using the band of the second cell as the SUL band. In the foregoing technical solution, the access network device broadcasts the band of the second cell in the first cell, and correspondingly, a plurality of UEs (including the first UE) in the first cell may all receive the band of the second cell, and determine whether to support using the band of the second cell as the SUL band. In this way, the access network device may schedule the plurality of UEs to send the uplink information on the band of the second cell in the SUL communication manner. This helps improve uplink throughput rates of a cell and a user, and improve resource utilization in a communication system.

In a possible implementation, that the access network device determines the band of the second cell that can be used as the SUL band of the first UE may be specifically: The access network device receives capability information from the first UE, where the capability information includes the band of the second cell and indication information, and the indication information indicates that the first UE supports using the band of the second cell as the SUL band; and the access network device determines, based on the capability information of the first UE, a band of the first cell, and a correspondence between the band of the first cell and the band of the second cell, the band of the second cell that can be used as the SUL band of the first UE. In the foregoing technical solution, the first UE reports the capability information of the first UE to the access network device, and the access network device determines, based on the capability information of the first UE, the band that can be used as the SUL band of the first UE. This helps improve a determining success rate.

In a possible implementation, the capability information further includes a full capability of sending the uplink information by the first UE when the band of the second cell is used as the SUL band. For example, this solution is applicable to a case in which a combination of the band of the first cell and the band of the second cell is not a CA band combination. In the foregoing technical solution, the access network device can more effectively schedule, based on the full capability, the first UE to send the uplink information.

In a possible implementation, the capability information further includes a difference between a capability of sending the uplink information by the first UE when the band of the second cell is used as the SUL band and a capability of sending the uplink information by the first UE when the band of the second cell is used as the TDD band or the FDD band. For example, this solution is applicable to a case in which a combination of the band of the first cell and the band of the second cell is a CA band combination, that is, a case in which the band of the second cell is used as a secondary cell band. In the foregoing technical solution, the access network device can determine, based on the capability of sending the uplink information by the first UE when the band of the second cell is used as the TDD band or the FDD band and the capability difference, the capability (that is, the full capability) of sending the uplink information by the first UE when the band of the second cell is used as the SUL band. The access network device more effectively schedules, based on the full capability, the first UE to send the uplink information. In addition, the first UE reports only the capability difference to the access network device, which helps reduce uplink resource overheads.

In a possible implementation, before determining the band of the second cell that can be used as the SUL band of the first UE, the access network device further sends measurement indication information to the first UE, where the measurement indication information indicates the first UE to measure channel quality of the second cell. Correspondingly, the access network device receives the channel quality of the second cell from the first UE, and determines that the channel quality of the second cell is greater than a channel quality threshold. In this way, the access network device may select, from a plurality of neighboring cells of the first cell, a cell with good channel quality as the second cell. This helps improve uplink throughput rates of a cell and a user, and improve resource utilization in a communication system.

In a possible implementation, the scheduling information indicates the first UE to send the uplink information on the band of the second cell in the SUL communication manner in a first slot. Before sending the scheduling information to the first UE, the access network device further predicts a first transmission capability of sending the uplink information by the first UE on the band of the first cell in the first slot and a second transmission capability of sending the uplink information by the first UE on the band of the second cell in the first slot, and determines that the second transmission capability is superior to the first transmission capability. In the foregoing technical solution, the access network device may schedule the first UE to send the uplink information in the first cell and the second cell in a time division manner. Further, the access network device selects, based on a transmission capability of the first cell and a transmission capability of the second cell, a cell with a good transmission capability as a cell for the first UE to send the uplink information, thereby helping improve an uplink throughput rate of the first UE.

In a possible implementation, the uplink information includes first uplink information and second uplink information. The scheduling information indicates the first UE to send the first uplink information on the band of the first cell in a second slot, and indicates the first UE to send the second uplink information on the band of the second cell in the SUL communication manner in the second slot. In the foregoing technical solution, the access network device may schedule the first UE to send the uplink information in parallel in the first cell and the second cell, thereby helping improve an uplink throughput rate of the UE.

In a possible implementation, the second cell is a serving cell of a second UE, and an uplink resource of the second cell is shared by the first UE and the second UE. For example, the access network device schedules the first UE and the second UE to share an uplink slot resource of the second cell. For example, the access network device schedules the first UE and the second UE to share the uplink slot resource of the second cell in frequency domain and/or space domain. In this way, the access network device schedules the first UE to send the uplink information on the band of the second cell without affecting normal transmission of the uplink information by an existing UE (that is, the second UE) in the second cell.

In a possible implementation, before determining the band of the second cell that can be used as the SUL band of the first UE, the access network device further determines that one or more of the following conditions are satisfied: A throughput of sending the uplink information by the first UE on the band of the first cell is lower than a throughput requirement of the first UE; uplink resource utilization of the second cell is lower than preset utilization; and an available processing capability of the second cell is higher than a preset processing capability. In this way, a problem that an uplink resource of the first cell is wasted because the access network device still schedules the first UE to send the uplink information on the band of the second cell when the first cell is idle is avoided. In addition, a problem that an existing UE (that is, the second UE) in the second cell cannot normally transmit the uplink information because the access network device still schedules the first UE to send the uplink information on the band of the second cell when the second cell is busy is avoided.

According to a second aspect, this application provides a communication method. The communication method may be performed by a first UE or a module (for example, a chip or a circuit) in the first UE. The following provides descriptions by using an example in which the method is performed by the first UE.

The first UE receives scheduling information from an access network device, and the first UE sends uplink information on a band of a second cell in an SUL communication manner based on the scheduling information. The scheduling information is generated after the access network device determines the band of the second cell that can be used as an SUL band of the first UE. A serving cell of the first UE is a first cell. The second cell is a neighboring cell of the first cell. The band of the second cell is a TDD band or an FDD band.

In a possible implementation, before receiving the scheduling information from the access network device, the first UE further receives the band of the second cell that is broadcast by the access network device in the first cell, and the first UE sends capability information of the first UE, where the capability information indicates that the first UE supports using the band of the second cell as the SUL band. In a possible implementation, before receiving the scheduling information from the access network device, the first UE further sends capability information of the first UE, where the capability information includes the band of the second cell and indication information, and the indication information indicates that the first UE supports using the band of the second cell as the SUL band.

In a possible implementation, the capability information further includes a full capability of sending the uplink information by the first UE when the band of the second cell is used as the SUL band. In a possible implementation, the capability information further includes a difference between a capability of sending the uplink information by the first UE when the band of the second cell is used as the SUL band and a capability of sending the uplink information by the first UE when the band of the second cell is used as the TDD band or the FDD band.

In a possible implementation, before receiving the scheduling information from the access network device, the first UE further receives measurement indication information from the access network device; obtains channel quality of the second cell through measurement based on the measurement indication information; and sends the channel quality of the second cell to the access network device, where the channel quality of the second cell is greater than a channel quality threshold.

In a possible implementation, the scheduling information indicates to send the uplink information on the band of the second cell in the SUL communication manner in a first slot; and in the first slot, a second transmission capability of sending the uplink information on the band of the second cell is superior to a first transmission capability of sending the uplink information on a band of the first cell. In a possible implementation, the uplink information includes first uplink information and second uplink information, and the scheduling information indicates to send the first uplink information on the band of the first cell in a second slot, and send the second uplink information on the band of the second cell in the SUL communication manner in the second slot.

According to a third aspect, an embodiment of this application provides a communication apparatus. The apparatus has a function of implementing the access network device in any one of the first aspect or the possible implementations of the first aspect. The apparatus may be the access network device, or may be a chip included in the access network device.

Alternatively, the communication apparatus may have a function of implementing the first UE in any one of the second aspect or the possible implementations of the second aspect. The apparatus may be the first UE, or may be a chip included in the first UE.

A function of the communication apparatus may be implemented by hardware, or may be implemented by hardware executing corresponding software. The hardware or the software includes one or more modules, units, or means (means) corresponding to the function.

In a possible implementation, a structure of the apparatus includes a processing module and a transceiver module. The processing module is configured to support the apparatus in performing a corresponding function of the access network device in any one of the first aspect or the implementations of the first aspect, or performing a corresponding function of the first UE in any one of the second aspect or the implementations of the second aspect. The transceiver module is configured to support communication between the apparatus and another communication device. For example, when the apparatus is the access network device, the apparatus may send scheduling information to the first UE. The communication apparatus may further include a storage module. The storage module is coupled to the processing module, and stores program instructions and data that are necessary for the apparatus. In an example, the processing module may be a processor, a communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, so that the apparatus is caused to perform the method in any one of the first aspect or the possible implementations of the first aspect, or perform the method in any one of the second aspect or the possible implementations of the second aspect. Optionally, the apparatus further includes a communication interface, and the processor is coupled to the communication interface. When the apparatus is the first UE or the access network device, the communication interface may be a transceiver or an input/output interface. When the apparatus is a chip included in the first UE or a chip included in the access network device, the communication interface may be an input/output interface of the chip. Optionally, the transceiver may be a transceiver circuit, and the input/output interface may be an input/output circuit.

According to a fourth aspect, an embodiment of this application provides a chip system, including a processor. The processor is coupled to a memory, the memory is configured to store a program or instructions, and when the program or the instructions are executed by the processor, the chip system is caused to implement the method in any one of the first aspect or the possible implementations of the first aspect, or implement the method in any one of the second aspect or the possible implementations of the second aspect.

Optionally, the chip system further includes an interface circuit, and the interface circuit is configured to exchange code or an instruction with the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory (read-only memory, ROM). The memory and the processor may be integrated into a same chip, or may be separately disposed on different chips.

According to a fifth aspect, an embodiment of this application provides a computer-readable storage medium. The computer-readable storage medium stores a computer program or instructions. When the computer program or the instructions are executed by a communication apparatus, the communication apparatus is caused to perform the method in any one of the first aspect or the possible implementations of the first aspect, or perform the method in any one of the second aspect or the possible implementations of the second aspect.

According to a sixth aspect, an embodiment of this application provides a computer program product. When a communication apparatus reads and executes the computer program product, the communication apparatus is caused to perform the method in any one of the first aspect or the possible implementations of the first aspect, or perform the method in any one of the second aspect or the possible implementations of the second aspect.

According to a seventh aspect, an embodiment of this application provides a communication system. The communication system includes an access network device and a first UE. Optionally, the communication system may further include a second UE. The access network device is configured to perform the method in any one of the first aspect or the possible implementations of the first aspect, and the first UE is configured to perform the method in any one of the second aspect or the possible implementations of the second aspect.

According to an eighth aspect, an embodiment of this application provides a communication method. The communication method includes: An access network device determines a band of a second cell that can be used as an SUL band of a first UE, where a serving cell of the first UE is a first cell, the second cell is a neighboring cell of the first cell, and the band of the second cell is a TDD band or an FDD band; and the access network device sends scheduling information to the first UE, where the scheduling information indicates the first UE to send uplink information on the band of the second cell in an SUL communication manner. Correspondingly, the first UE receives the scheduling information from the access network device, and sends the uplink information on the band of the second cell in the SUL communication manner based on the scheduling information.

For technical effects that can be achieved in any one of the second aspect to the eighth aspect, refer to the descriptions of beneficial effects in the first aspect. Details are not described herein again.

### BRIEF DESCRIPTION OF DRAWINGS

FIG. 1 is a diagram of information transmission;
FIG. 2 is a diagram of a communication system according to this application;
FIG. 3 is a schematic flowchart of a communication method according to this application;
FIG. 4 is a schematic flowchart of determining a target SUL band according to this application;
FIG. 5 is another schematic flowchart of determining a target SUL band according to this application;
FIG. 6 is a schematic flowchart of determining a target cell according to this application;
FIG. 7 is a diagram of a scenario in which a base station schedules, based on a position of a UE, the UE to send uplink information according to this application;
FIG. 8 is a diagram of information transmission according to this application;
FIG. 9 is another diagram of information transmission according to this application;
FIG. 10 is still another diagram of information transmission according to this application;
FIG. 11 is a diagram of information transmission when an SUL band is a TDD band according to this application;
FIG. 12 is a diagram of information transmission when an SUL band is a FDD band according to this application;
FIG. 13 is a diagram of resource allocation according to this application;
FIG. 14 is another diagram of resource allocation according to this application;
FIG. 15 is a diagram of a structure of a communication apparatus according to this application; and
FIG. 16 is a diagram of a structure of another communication apparatus according to this application.

### DESCRIPTION OF EMBODIMENTS

For ease of understanding of embodiments of this application, related terms used in this specification are first briefly described.
I. Time division duplex (time division duplex, TDD) is a duplex communication technology in a communication system. A same frequency-domain resource and different time-domain resources may be used for uplink data sending and downlink data sending.
II. Frequency division duplex (time division duplexing, FDD) is also a duplex communication technology in a communication system. A same time-domain resource and different frequency-domain resources may be used for uplink data sending and downlink data sending.
III. Carrier aggregation (carrier aggregation, CA) is a CA technology used for aggregating two or more component carriers (component carrier, CC) to support a larger transmission bandwidth. For example, a maximum transmission bandwidth may be 100 megahertz (megahertz, MHz), and a bandwidth of each component carrier may be 5 MHz, 10 MHz, 15 MHz, 20 MHz, or the like.

The CA technology involves a primary cell (primary cell, PCell) and a secondary cell (secondary cell, SCell). The primary cell is a cell to which a UE establishes an initial connection, or a cell to which the UE reestablishes a radio resource control (radio resource control, RRC) connection, or a primary cell specified in a handover (handover, HO) process. A component carrier corresponding to the primary cell is referred to as a primary component carrier (primary component carrier, PCC). The secondary cell is added during RRC reconfiguration, and is configured to provide an extra radio resource. A component carrier corresponding to the secondary cell is referred to as a secondary component carrier (secondary component carrier, SCC).

### IV. Supplementary uplink (supplementary uplink, SUL) technology

### 1. SUL carrier

An SUL carrier is configured for an NR cell to improve an uplink throughput rate. The SUL carrier may be paired with a downlink carrier for use, and belongs to a cell corresponding to the downlink carrier. After an SUL carrier is configured for a cell, the cell correspondingly has two uplink carriers: the SUL carrier and a NUL carrier.

A UE may send uplink information to a base station by using the SUL carrier in the following two manners.

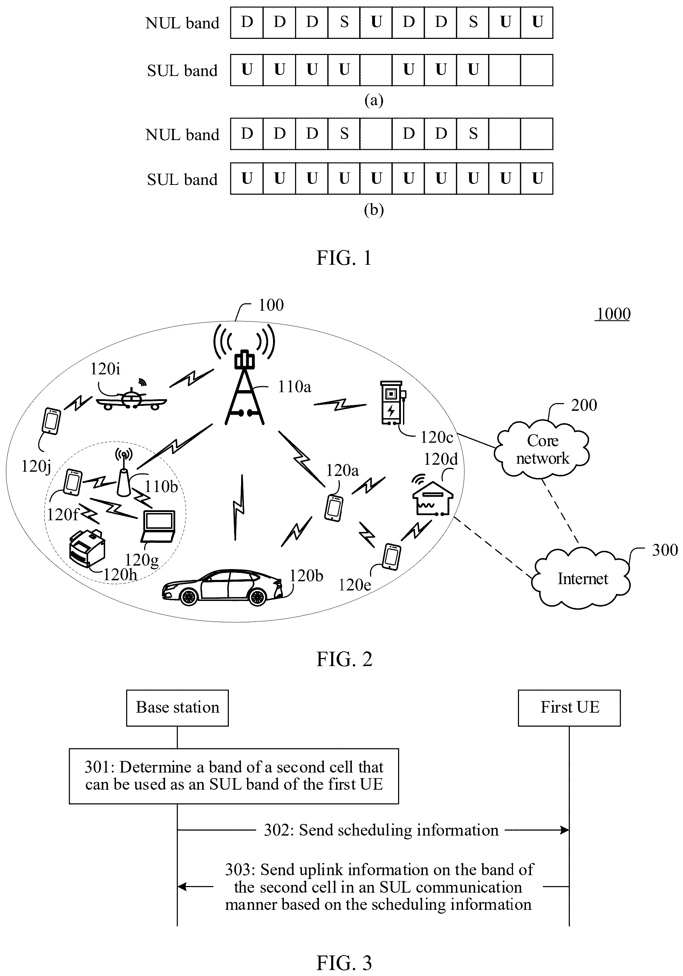

Manner 1: Time division multiplexing (time division multiplexing, TDM) is performed between a band of the NUL carrier (a NUL band for short) and a band of the SUL carrier (an SUL band for short), that is, time-division sending is performed on the two bands. Specifically, in a specific slot (slot), the UE sends the uplink information to the base station on either the NUL band or the SUL band. For details, refer to (a) in FIG. 1.

Manner 2: Transmission is performed only on an SUL. For details, refer to (b) in FIG. 1.

It should be supplemented that, in a diagram of information transmission shown in FIG. 1, D represents a slot used for downlink (downlink) information transmission, U represents a slot used for uplink (uplink) information transmission, and S represents a slot used for transmission of information such as a reference signal and control information. For example, D is a downlink subframe (downlink subframe), U is an uplink subframe (uplink subframe), and S is a special subframe (special subframe). The descriptions may also be used in another diagram of information transmission in this application.

### 2. SUL band and SUL band combination

For an SUL band defined in the 3GPP protocol, refer to the following Table 1. For example, n80, n81, n82, and the like may all be used as SUL bands.

Further, the 3GPP protocol further defines an SUL band combination. The SUL band combination includes a correspondence between a NUL band and an SUL band. In other words, when a serving cell of a UE is on a specific NUL band, the UE can further transmit uplink information on an SUL band corresponding to the NUL band. The NUL band is a TDD band or an FDD band. An example of a plurality of SUL band combinations is shown in Table 2. When the NUL band of the serving cell of the UE is n24, the UE can use n99 as the SUL band to transmit the uplink information; or when the NUL band of the serving cell of the UE is n41, the UE can use n80 as the SUL band to transmit the uplink information.

**Table 1**

| NR operating band (NR operating band) | Uplink operating band BS receive/UE transmit (uplink operating band (to be specific, BS receive/UE transmit)) | Downlink operating band BS transmit/UE receive (downlink operating band (to be specific, BS transmit/UE receive)) | Duplex mode (duplex mode) |
|---|---|---|---|
| n80 | 1710-1785 MHz | N/A | SUL |
| n81 | 880-915 MHz | N/A | SUL |
| n82 | 832-862 MHz | N/A | SUL |
| n83 | 703-748 MHz | N/A | SUL |
| n84 | 1920-1980 MHz | N/A | SUL |
| n86 | 1710-1780 MHz | N/A | SUL |
| n89 | 824-849 MHz | N/A | SUL |
| n97 | 2300-2400 MHz | N/A | SUL |
| n98 | 1880-1920 MHz | N/A | SUL |
| n99 | 1626.5-1660.5 MHz | N/A | SUL |

**Table 2**

| SUL band combination | |
|---|---|
| NUL band | SUL band |
| n24 | n99 |
| n41 | n80 |
| n41 | n81 |
| n41 | n83 |
| n41 | n95 |
| n41 | n97 |
| n41 | n98 |
| n41 | n99 |
| n48 | n99 |
| n77 | n80 |
| n77 | n84 |
| n77 | n99 |
| n78 | n80 |
| n78 | n81 |
| n78 | n82 |
| n78 | n83 |
| n78 | n84 |
| n78 | n86 |
| n79 | n80 |
| n79 | n81 |
| n79 | n83 |
| n79 | n84 |
| n79 | n95 |
| n79 | n97 |
| n79 | n98 |

Based on the foregoing explanations of related terms, the following describes embodiments of this application with reference to the accompanying drawings.

FIG. 2 is a diagram of an architecture of a communication system 1000 to which an embodiment of this application is applied. As shown in FIG. 2, the communication system includes a radio access network 100 and a core network 200. Optionally, the communication system 1000 may further include an internet 300.

The radio access network 100 may include at least one radio access network device (or referred to as an access network device) (for example, 110a and 110b in FIG. 2), and may further include at least one UE (for example, 120a to 120j in FIG. 2). The UE is connected to the access network device in a wireless manner, and the access network device is connected to the core network in a wireless or wired manner. A core network device and the access network device may be different physical devices that are independent of each other, or functions of the core network device and logical functions of the access network device may be integrated into a same physical device, or some functions of the core network device and some functions of the access network device may be integrated into one physical device. The UEs may be connected to each other in a wired or wireless manner, and the access network devices may be connected to each other in a wired or wireless manner. FIG. 2 is merely a diagram. The communication system may further include other network devices, for example, may further include a wireless relay device and a wireless backhaul device, which are not shown in FIG. 2.

The access network device may be a base station (base station, BS), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like. The access network device may alternatively be a module or unit that completes a part of functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of a base station, and may further complete functions of a service data adaptation protocol (service data adaptation protocol, SDAP). The DU completes functions of a radio link control layer and a medium access control (medium access control, MAC) layer of a base station, and may further complete some or all of functions of physical layers. The access network device may be a macro base station (for example, 110a in FIG. 2), or may be a micro base station or an indoor base station (for example, 110b in FIG. 2), or may be a relay node, a donor node, or the like. A specific technology and a specific device form that are used for the access network device are not limited in embodiments of this application. For ease of description, the following uses a base station as an example for description.

The UE may also be referred to as a mobile device, a terminal device, a mobile station, or the like. The UE may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grids, smart furniture, smart offices, smart wear, smart transportation, and smart cities. The UE may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used for the UE are not limited in embodiments of this application.

The base station and the UE may be at fixed positions, or may be movable. The base station and the UE may be deployed on land, including an indoor or outdoor scenario, and a handheld or vehicle-mounted scenario; or may be deployed on water; or may be deployed on an airplane, a balloon, and an artificial satellite in the air. Application scenarios of the base station and the UE are not limited in embodiments of this application.

Roles of the base station and the UE may be relative. For example, the helicopter or the uncrewed aerial vehicle 120i in FIG. 2 may be configured as a mobile base station. For the UE 120j accessing the radio access network 100 via 120i, the UE 120i is a base station. However, for the base station 110a, 120i is a UE. In other words, communication between 110a and 120i is performed based on a radio air interface protocol. Certainly, communication between 110a and 120i may alternatively be performed based on an interface protocol between the base stations. In this case, for 110a, 120i is also a base station. Therefore, the base station and the UE may be collectively referred to as communication apparatuses, 110a and 110b in FIG. 2 may be referred to as communication apparatuses having base station functions, and 120a to 120j in FIG. 2 may be referred to as communication apparatuses having UE functions.

Communication between the base station and the UE, between base stations, or between UEs may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as smart grids, industrial control, smart transportation, and smart cities. A function of the UE may alternatively be performed by a module (for example, a chip or a modem) in the UE, or may be performed by an apparatus including the function of the UE.

In this application, the base station sends a downlink signal or downlink information to the UE, where the downlink information is carried in a downlink channel; and the UE sends an uplink signal or uplink information to the base station, where the uplink information is carried in an uplink channel. To communicate with the base station, the UE needs to establish a wireless connection to a cell controlled by the base station. The cell to which the UE establishes the wireless connection is referred to as a serving cell of the UE. When communicating with the serving cell, the UE is further interfered by a signal from a neighboring cell.

Currently, when the access network device schedules the UE to transmit the uplink information on the SUL band, selection can be performed only based on SUL bands defined in the 3GPP protocol. However, there are limited SUL bands defined in the 3GPP protocol. When these SUL bands are busy, it is difficult for the access network device to further improve an uplink throughput rate by using the SUL technology. Therefore, this application provides a communication method, to enable a TDD band or an FDD band defined in the 3GPP protocol to be used in an SUL communication manner (that is, use the TDD band or the FDD band as an SUL band), to further improve uplink throughput rates of a cell and a user, and improve resource utilization in a communication system.

The following first explains and describes enabling the TDD band or the FDD band to be used in the SUL communication manner.
(1) The TDD band is enabled to be used in the SUL communication manner.

For example, the 3GPP protocol defines that both n78 and n79 can be used as TDD bands. Further, Table 3 shows an example of enabling the TDD band to be used in the SUL communication manner provided in this application. n78 may not only be used as a normal TDD band, but also be used as an SUL band. Similarly, n79 may not only be used as a normal TDD band, but also be used as an SUL band. For ease of description, the TDD band that is enabled to be used in the SUL communication manner may be referred to as an SUL band below.

**Table 3**

| NR operating band (NR operating band) | Uplink operating band BS receive/UE transmit (uplink operating band (to be specific, BS receive/UE transmit)) | Downlink operating band BS transmit/UE receive (downlink operating band (to be specific, BS transmit/UE receive)) | Duplex mode (duplex mode) |
|---|---|---|---|
| n78 | 3300-3800 MHz | 3300-3800 MHz | TDD, SUL |
| n79 | 4400-5000 MHz | 4400-5000 MHz | TDD, SUL |
| n39 | 1880-1920 MHz | 1880-1920 MHz | TDD, SUL |
| ... | ... | ... | ... |

Further, an SUL band combination corresponding to each SUL band needs to be defined.

In an example, a CA band combination that has been defined in the 3GPP protocol may be reused as an SUL band combination. Table 4 shows an example of CA band combinations defined in the 3GPP protocol. In this application, these CA band combinations may be used as SUL band combinations. For example, a CA band combination "n41-n78" indicates that when n41 is used as a primary cell band, n78 can be used as a secondary cell band corresponding to the primary cell band. Further, in this application, the CA band combination may be reused as an SUL band combination, that is, it indicates that when n41 is used as a NUL band, n78 may be used as an SUL band corresponding to the NUL band. For another example, a CA band combination "n41-n79" indicates that when n41 is used as a primary cell band, n79 can be used as a secondary cell band corresponding to the primary cell band. Further, in this application, the CA band combination may be reused as an SUL band combination, and it indicates that when n41 is used as a NUL band, n79 may be used as an SUL band corresponding to the NUL band. Other CA band combinations are similar to this, and may be all reused as SUL band combinations. It may also be understood that, Table 4 shows newly defined SUL band combinations provided in this application. A primary cell band may be replaced with a NUL band, and a secondary cell band may be replaced with an SUL band.

**Table 4**

| CA band combination | |
|---|---|
| Primary cell band | Secondary cell band |
| n34 | n40 |
| n34 | n79 |
| n39 | n40 |
| n39 | n41 |
| n39 | n79 |
| n40 | n41 |
| n40 | n78 |
| n40 | n79 |
| n41 | n78 |
| n41 | n79 |
| n46 | n48 |
| n46 | n78 |
| n48 | n53 |
| n48 | n70 |
| n48 | n71 |
| n48 | n77 |
| n50 | n78 |
| n77 | n79 |
| n78 | n79 |
| n1 | n40 |
| n1 | n41 |
| n2 | n48 |
| n2 | n77 |
| n3 | n34 |
| n3 | n38 |
| n3 | n40 |
| n7 | n78 |
| ... | ... |

In another example, an SUL band combination is newly defined based on the SUL band. The SUL band combination is not a CA band combination that has been defined in the 3GPP protocol. For example, if the SUL band is n39, and the newly defined SUL band combination is n78-n39, it indicates that when n78 is used as a NUL band, n39 may be used as an SUL band corresponding to the NUL band. n78-n39 is not the CA band combination that has been defined in the 3GPP protocol.

(2) The FDD band is enabled to be used in the SUL communication manner.

For example, the 3GPP protocol defines that n28 can be used as the FDD band. Further, Table 5 shows an example of enabling the FDD band to be used in the SUL communication manner provided in this application. n28 may not only be used as a normal FDD band, but also be used as an SUL band. For ease of description, the FDD band that is enabled to be used in the SUL communication manner may be referred to as an SUL band below.

**Table 5**

| NR operating band (NR operating band) | Uplink operating band BS receive/UE transmit (uplink operating band (to be specific, BS receive/UE transmit)) | Downlink operating band BS transmit/UE receive (downlink operating band (to be specific, BS transmit/UE receive)) | Duplex mode (duplex mode) |
|---|---|---|---|
| n28 | 703-748 MHz | 758-803 MHz | FDD, SUL |
| n1 | 1920-1980 MHz | 2110-2170 MHz | FDD, SUL |
| n3 | 1710-1785 MHz | 1805-1880 MHz | FDD, SUL |
| ... | ... | ... | ... |

Further, an SUL band combination corresponding to each SUL band needs to be defined.

In an example, a CA band combination that has been defined in the 3GPP protocol may be reused as an SUL band combination. Table 6 shows an example of CA band combinations defined in the 3GPP protocol. In this application, these CA band combinations may be used as SUL band combinations. Specifically, a CA band combination "n40-n1" indicates that when n40 is used as a primary cell band, n1 can be used as a secondary cell band corresponding to the primary cell band. Further, in this application, the CA band combination may be reused as an SUL band combination, that is, it indicates that when n40 is used as a NUL band, n1 may be used as an SUL band corresponding to the NUL band. A CA band combination "n77-n1" indicates that when n77 is used as a primary cell band, n1 can be used as a secondary cell band corresponding to the primary cell band. Further, in this application, the CA band combination may be reused as an SUL band combination, and it indicates that when n77 is used as a NUL band, n1 may be used as an SUL band corresponding to the NUL band. Other CA band combinations are similar to this, and may be all reused as SUL band combinations. It may also be understood that, Table 6 shows newly defined SUL band combinations provided in this application. A primary cell band may be replaced with a NUL band, and a secondary cell band may be replaced with an SUL band.

**Table 6**

| CA band combination | |
|---|---|
| Primary cell band | Secondary cell band |
| n40 | n1 |
| n77 | n1 |
| n78 | n1 |
| n48 | n2 |
| n77 | n2 |
| n78 | n2 |
| n34 | n3 |
| n38 | n3 |
| n40 | n3 |
| n30 | n5 |
| n48 | n5 |
| n77 | n5 |
| n77 | n7 |
| n78 | n7 |
| n34 | n8 |
| n39 | n8 |
| n40 | n8 |
| n48 | n12 |
| n77 | n12 |
| n77 | n13 |
| n78 | n18 |
| n78 | n20 |
| n1 | n3 |
| n1 | n5 |
| n1 | n7 |
| n2 | n5 |
| n2 | n7 |
| n2 | n12 |
| n3 | n5 |
| n3 | n7 |
| n3 | n8 |
| n3 | n18 |
| n12 | n25 |
| ... | ... |

In another example, an SUL band combination is newly defined based on the SUL band. The SUL band combination is not a CA band combination that has been defined in the 3GPP protocol. For example, if the SUL band is n1, and the newly defined SUL band combination is n40-n1, it indicates that when n40 is used as a NUL band, n1 may be used as an SUL band corresponding to the NUL band. n40-n1 is not the CA band combination that has been defined in the 3GPP protocol.

FIG. 3 is a schematic flowchart of a communication method according to an example of this application. The communication method may be performed through interaction of an access network device and a first UE. The access network device and the first UE may be respectively the access network device and the UE shown in FIG. 2. For ease of description, the following uses an example in which the access network device is a base station for description.

Step 301: The base station determines a band of a second cell that can be used as an SUL band of the first UE.

A serving cell of the first UE is a first cell, the first cell has a plurality of neighboring cells, and the plurality of neighboring cells include the second cell. The first cell is a cell controlled by the base station. The second cell may be a cell controlled by the base station, or may be a cell controlled by another base station. The SUL band of the first UE is specifically a band that can be used by the first UE to send uplink information to the base station in an SUL communication manner.

A band of the first cell may be a TDD band or an FDD band defined in the 3GPP protocol. Similarly, the band of the second cell may also be a TDD band or an FDD band defined in the 3GPP protocol.

A range of a TDD band number is 34-53 and 77-79. A range of an FDD band number is 1-28, 65-74, and 90-94. For example, the band of the first cell is a TDD band with a band number of n41, and the band of the second cell is a TDD band with a band number of n79; the band of the first cell is a TDD band with a band number of n40, and the band of the second cell is an FDD band with a band number of n1; the band of the first cell is an FDD band with a band number of n1, and the band of the second cell is a TDD band with a band number of n40; or the band of the first cell is an FDD band with a band number of n2, and the band of the second cell is an FDD band with a band number of n12.

In a possible manner, the base station and the first UE first negotiate a target SUL band supported by both the base station and the first UE. Then, the base station selects, from the neighboring cells of the first cell, a target cell (that is, the second cell) that is on the target SUL band and in which the SUL communication manner can be enabled.

With reference to Implementation 1 and Implementation 2, the following first explains and describes the negotiation between the base station and the first UE on the target SUL band.

### Implementation 1

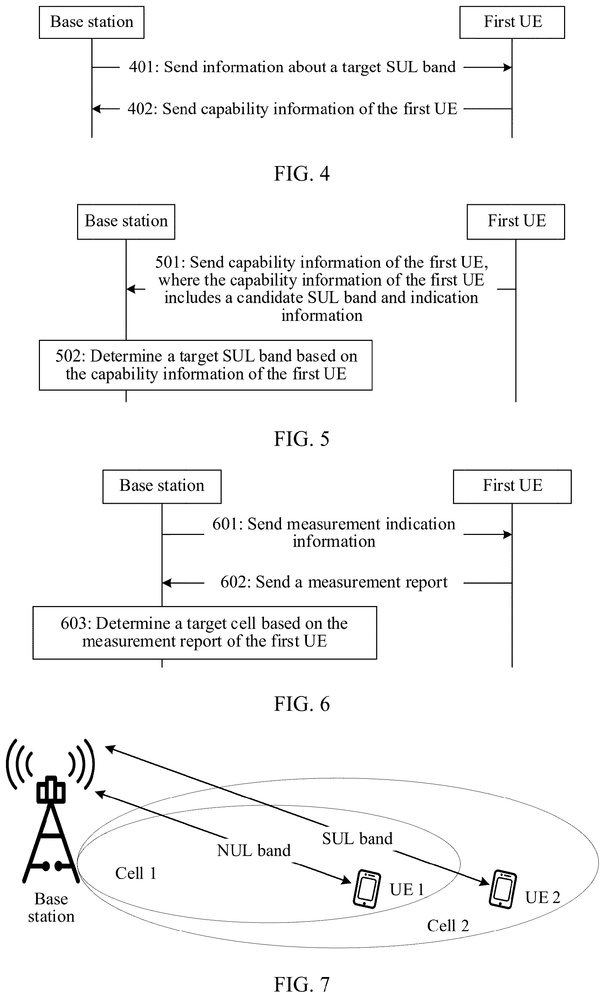

For details, refer to an example of a schematic flowchart of determining the target SUL band shown in FIG. 4.

Step 401: The base station sends information about the target SUL band to the first UE.

Correspondingly, the first UE receives the information about the target SUL band from the base station.

The base station may send the information about the target SUL band to the first UE in a broadcast manner or a unicast manner in the first cell.

Specifically, the information about the target SUL band may include an identifier of the target SUL band. For example, the identifier of the target SUL band is a band number of the target SUL band or a band range of the target SUL band. For example, if the target SUL band is n78, the base station may broadcast n78 or 3300-3800 MHz in the first cell.

Further, the information about the target SUL band may further include one or more of the following information of the target SUL band: an uplink center frequency, a start resource block (resource block, RB) position of an uplink bandwidth part (bandwidth part, BWP) 0, a bandwidth of the uplink BWP 0, a subcarrier spacing, and the like.

When the base station broadcasts the information about the target SUL band to the first UE, for example, the base station may include the information about the target SUL band in remaining minimum system information (remaining minimum system information, RMSI) of the first cell. For another example, the base station may broadcast the information about the target SUL band in a multiple synchronization signal and physical broadcast channel block (multiple synchronization signal and PBCH (physical broadcast channel) block, multiple SSB) of the first cell.

In a possible implementation, before step 401, the base station may first determine the target SUL band.

For example, the base station may determine, based on an SUL band supported by the base station, bands of one or more neighboring cells of the first cell, the band (that is, a NUL band) of the first cell, and an SUL band combination, a target SUL band corresponding to the NUL band of the first cell.

There is one target SUL band. The SUL band combination may be an SUL band combination defined in the 3GPP protocol, or an SUL band combination newly defined in this application (as shown in Table 4 or Table 6).

For example, the base station determines, from the SUL band combination based on the NUL band of the first cell, one or more SUL bands corresponding to the NUL band. Then, the base station determines an intersection set of the one or more SUL bands corresponding to the NUL band, the SUL band supported by the base station, and the bands of the one or more neighboring cells of the first cell, and determines the target SUL band based on the intersection set. For example, when the intersection set includes a plurality of SUL bands, the base station may randomly select one SUL band from the intersection set as the target SUL band.

With reference to Table 4, for example, the NUL band corresponding to the first cell is n41. The base station determines, based on the NUL band n41 and the SUL band combination, that n78 and n79 may be used as SUL bands corresponding to n41. Further, the base station determines that the plurality of neighboring cells of the first cell include a cell corresponding to n78 but do not include a cell corresponding to n79, and the base station supports using n78 and n79 as the SUL bands. Therefore, n78 is selected as the target SUL band. With reference to Table 4, for example, the NUL band corresponding to the first cell is n41. The base station determines, based on the NUL band n41 and the SUL band combination, that n78 and n79 may be used as SUL bands corresponding to n41. Further, the base station determines that the plurality of neighboring cells of the first cell include a cell corresponding to n78 and a cell corresponding to n79, and the base station supports using n78 and n79 as the SUL bands. Therefore, n78 or n79 is selected as the target SUL band.

In addition, the base station may further determine a target SUL band based on other information (for example, a band supported by an operator to which the base station belongs, or a band supported by a region to which the base station belongs).

Step 402: The first UE sends capability information of the first UE to the base station.

Correspondingly, the base station receives the capability information of the first UE from the first UE.

In a possible implementation, the first UE determines, based on an SUL band supported by the first UE and the target SUL band, that the first UE supports the target SUL band, and then sends the capability information of the first UE to the base station.

The capability information of the first UE indicates whether the first UE supports using the target SUL band as a band of the SUL communication manner, or the capability information of the first UE indicates whether the first UE supports the target SUL band. For example, the capability information of the first UE includes the identifier of the target SUL band. For another example, the capability information of the first UE further includes indication information corresponding to the target SUL band. For example, when a value of the indication information is 1, it indicates that the first UE supports the target SUL band. The capability information of the first UE is, for example, UE capability information (UECapabilityInformation).

It should be supplemented that, before step 401, if the base station determines that the intersection set of the SUL band corresponding to the NUL band, the SUL band supported by the base station, and the band of the neighboring cell of the first cell includes a plurality of SUL bands, the base station may alternatively use the plurality of SUL bands as a plurality of candidate SUL bands and send the plurality of candidate SUL bands to the first UE in a broadcast or unicast manner in the first cell. Correspondingly, the first UE receives the plurality of candidate SUL bands from the base station. The first UE selects, from the plurality of candidate SUL bands, a candidate SUL band supported by the first UE as the target SUL band. There may be one or more target SUL bands. Further, the first UE sends the capability information to the base station. Correspondingly, the base station receives the capability information from the first UE. The capability information of the first UE indicates that the first UE supports using the target SUL band as the band of the SUL communication manner. For example, the base station determines n78 and n79 as candidate SUL bands, and the base station sends information about the two bands n78 and n79 to the first UE. Correspondingly, the first UE receives the information about the n78 band and the information about the n79 band from the base station, and the first UE determines that the first UE supports using the n78 band and the n79 band as SUL bands. Therefore, the capability information of the first UE sent to the base station includes n78 and n79. For content that is not described in detail in this embodiment, refer to the related embodiment in FIG. 4. Details are not described again.

### Implementation 2

For details, refer to an example of another schematic flowchart of determining the target SUL band shown in FIG. 5.

Step 501: The first UE sends capability information of the first UE to the base station.

Correspondingly, the base station receives the capability information of the first UE from the first UE.

The capability information of the first UE includes one or more candidate SUL bands and indication information corresponding to the candidate SUL bands. The indication information indicates that the first UE supports using these candidate SUL bands as bands of SUL communication. Optionally, the capability information of the first UE further includes NUL bands of the first cell that respectively correspond to the candidate SUL bands, that is, the capability information of the first UE includes an SUL band combination supported by the first UE. For example, if the NUL band corresponding to the first cell is n41, the capability information of the first UE may include the following two items: "n41-n78, indication information" and "n41-n79, indication information". "n41-n78, indication information" indicates that the first UE supports using n78 as an SUL band when the first UE is in a serving cell on the n41 band, and "n41-n79, indication information" indicates that the first UE supports using n79 as an SUL band when the first UE is in the serving cell on the n41 band.

Optionally, before step 501, the first UE may first determine the candidate SUL band.

For example, the first UE determines the candidate SUL band based on a SUL band supported by the first UE, the band (that is, a NUL band) of the first cell, and an SUL band combination. The SUL band combination may be an SUL band combination defined in the 3GPP protocol, or an SUL band combination newly defined in this application (as shown in Table 4 or Table 6). There may be one or more candidate SUL bands.

With reference to the example in Table 4, the NUL band corresponding to the first cell is n41, the first UE determines that n41 corresponds to n78 and n79, and further, the first UE supports using n78 as an SUL band. In this case, n78 is selected as the candidate SUL band. Alternatively, the NUL band corresponding to the first cell is n41, the first UE determines that n41 corresponds to n78 and n79, and further, the first UE supports n78 and n79 as SUL bands. In this case, n78 and n79 are selected as candidate SUL bands.

Step 502: The base station determines the target SUL band based on the capability information of the first UE.

Specifically, the base station may determine the target SUL band based on an SUL band supported by the base station, the candidate SUL band in the capability information of the first UE, and a band of the neighboring cell of the first cell. There may be one or more target SUL bands. For example, there are candidate SUL bands n78 and n79, the plurality of neighboring cells of the first cell include a cell corresponding to n78 but do not include a cell corresponding to n79, and the base station supports using n78 and n79 as the SUL bands. Therefore, the base station selects n78 as the target SUL band. For another example, there are candidate SUL bands n78 and n79, the plurality of neighboring cells of the first cell include a cell corresponding to n78 and a cell corresponding to n79, and the base station supports using n78 and n79 as the SUL bands. Therefore, the base station selects n78 and n79 as target SUL bands.

In addition, the first UE may further report, in the capability information of the first UE, all SUL band combinations supported by the first UE and the indication information. Correspondingly, the base station may further determine the target SUL band in combination with the SUL band supported by the base station, the NUL band of the first cell to which the first UE belongs, and the band of the neighboring cell of the first cell. Specifically, the base station determines, based on the NUL band, and the SUL band combination and the indication information in the capability information of the first UE, one or more SUL bands corresponding to the NUL band, and further uses an intersection set of the one or more SUL bands corresponding to the NUL band, the SUL band supported by the base station, and the band of the neighboring cell of the first cell as the target SUL band. For example, SUL band combinations supported by the first UE include "n41-n78", "n41-n79", and "n40-n79", and the capability information reported by the first UE to the base station includes "n41-n78, indication information", "n41-n79, indication information", and "n40-n79, indication information". Correspondingly, the base station determines, based on the NUL band n41 of the first cell to which the first UE belongs, that SUL bands corresponding to the NUL band are n78 and n79. Further, the base station determines that the base station supports the SUL bands n78 and n79, and the band of the neighboring cell of the first cell includes n78 but does not include n79. Therefore, it is determined that the target SUL band is n78.

In the foregoing Implementation 1 and Implementation 2, the capability information of the first UE may further include a full capability. The full capability is specifically a full capability of sending the uplink information by the first UE when the first UE uses the target SUL band as the SUL band for sending the uplink information to the base station, or may also be understood as a full capability of sending the uplink information by the first UE when the target SUL band is enabled to be used in the SUL communication manner. The full capability may include at least one or more of the following: a maximum transmit power (maximum output power), a maximum supported bandwidth (bandwidth), a maximum quantity of layers supported by a physical uplink shared channel (physical uplink shared channel, PUSCH), a modulation scheme, and an uplink transmission switching period (uplink tx switching period).

It is considered that the target SUL band in this application may be specifically a TDD band that is enabled to be used in the SUL communication manner. When the TDD band is not enabled to be used in the SUL communication manner, the first UE can send the uplink information based on the TDD band. In other words, the first UE further has a capability of sending the uplink information on the TDD band (that is, a normal TDD band) that is not enabled to be used in the SUL communication manner. Further, the first UE has reported the capability to the base station in advance. For example, when the first UE accesses the first cell, or when the first UE receives a capability query from the base station, the first UE reports the capability to the base station in advance. To reduce a data amount when the first UE reports the capability, the UE may further determine a capability (denoted as a capability 1) of sending the uplink information by the first UE when the TDD band is not enabled to be used in the SUL communication manner (for example, the TDD band is used as a secondary cell band in a CA band combination) and a capability (denoted as a capability 2) of sending the uplink information by the first UE when the TDD band is enabled to be used in the SUL communication manner, to further determine a capability difference between the capability 1 and the capability 2, and report the capability difference to the base station. Correspondingly, the base station may determine the capability 2 based on the capability 1 and the capability difference that have been reported by the first UE.

For example, the capability 1 includes a maximum transmit power 1, a maximum supported bandwidth 1, a maximum quantity 1 of layers supported by the PUSCH, a modulation scheme 1, and an uplink transmission switching period 1. The capability 2 includes the maximum transmit power 1, the maximum supported bandwidth 1, the maximum quantity 1 of layers supported by the PUSCH, the modulation scheme 1, and an uplink transmission switching period 2. Therefore, the first UE may determine that the capability difference is the uplink transmission switching period 2, and then report the uplink transmission switching period 2 to the base station.

Similarly, when the target SUL band is specifically an FDD band that is enabled to be used in the SUL communication manner, the first UE may further determine a capability (denoted as a capability 3) of sending the uplink information by the first UE when the FDD band is not enabled to be used in the SUL communication manner (for example, the FDD band is used as the secondary cell band in the CA band combination) and a capability (denoted as a capability 4) of sending the uplink information by the first UE when the FDD band is enabled to be used in the SUL communication manner, to further determine a capability difference between the capability 3 and the capability 4 (that is, a capability difference), and report the capability difference to the base station. Correspondingly, the base station may determine the capability 4 based on the capability 3 and the capability difference that have been reported by the first UE. For a specific example, refer to the foregoing descriptions used when the target SUL band is the TDD band.

As described above, the base station and the first UE have negotiated the one or more target SUL bands. Further, the base station may select, from the neighboring cells of the first cell, a target cell that is on the target SUL band and whose band can be used for enabling the SUL communication manner. For details, refer to a schematic flowchart of an example of determining the target cell provided in FIG. 6.

Step 601: The base station sends measurement indication information to the first UE.

Correspondingly, the first UE receives the measurement indication information of the base station.

The measurement indication information indicates the first UE to measure reference signals of one or more neighboring cells of the first cell that are on the target SUL band, to obtain quality of a channel between the first UE and each neighboring cell.

The reference signal may be one or more of the following: a cell-specific reference signal (cell-specific reference signal, CS-RS), a positioning reference signal (positioning reference signal, PRS), and a channel state information-reference signal (channel state information-reference signal, CSI-RS).

The channel quality may be one or more of the following: channel state information (channel state information, CSI), reference signal received power (reference signal received power, RSRP), reference signal received quality (reference signal received quality, RSRQ), and a signal to interference and noise ratio (signal to interference and noise ratio, SINR).

For example, the measurement indication information may include one or more of the following information: the information about the target SUL band, and identifiers of the one or more neighboring cells of the first cell that are on the target SUL band.

Further, the measurement indication information may include a measurement event, and the measurement event indicates time at which the first UE needs to report the channel quality of the neighboring cell. The measurement event may be a measurement event A3 or a measurement event A5.

Optionally, the base station sends an RRC reconfiguration message to the first UE. The RRC reconfiguration message includes the measurement indication information.

Step 602: The first UE sends a measurement report to the base station.

Correspondingly, the base station receives the measurement report from the first UE.

The measurement report includes the channel quality of the one or more neighboring cells of the first cell that are on the target SUL band.

Specifically, the first UE measures, based on the measurement indication information, the reference signal sent by the neighboring cell of the first cell that is on the target SUL band, to obtain the channel quality of the neighboring cell. Further, when determining that the channel quality of the neighboring cell is greater than a channel quality threshold, the first UE sends the measurement report carrying the channel quality of the neighboring cell to the base station.

Step 603: The base station determines the target cell (that is, the second cell) based on the measurement report of the first UE.

In a 1^{st} example, the base station first performs priority sorting on the plurality of neighboring cells in the measurement report of the first UE, and then selects the target cell from the plurality of neighboring cells based on a sorting result.

The base station may perform priority sorting on the plurality of neighboring cells based on one of the following factors (1) to (4).
(1) Channel quality of the neighboring cells: A neighboring cell with better channel quality has a higher ranking in the sorting result, and a neighboring cell with poorer channel quality has a lower ranking in the sorting result.
(2) Transmission performance of the neighboring cells: A neighboring cell with better transmission performance has a higher ranking in the sorting result, and a neighboring cell with poorer transmission performance has a lower ranking in the sorting result. That the base station determines transmission performance of a specific neighboring cell may be specifically: The base station determines the transmission performance of the neighboring cell based on an available uplink bandwidth, a modulation order, coding efficiency, and a rank (RANK) of the neighboring cell. For example, the transmission performance = the available uplink bandwidth x the modulation order x the coding efficiency x RANK.
(3) Whether bands of the neighboring cells are the same as the band of the first cell: A neighboring cell whose band is the same as the band of the first cell is located before a neighboring cell whose band is not the same as the band of the first cell (that is, a neighboring cell whose band is different from the band of the first cell). Two cells whose bands are the same may be specifically two cells having a same band number.
(4) Whether the neighboring cells and the first cell belong to a same base station: A neighboring cell that belongs to a same base station as the first cell is located before a neighboring cell that does not belong to a same base station as the first cell.

In addition, the base station may further perform priority sorting on the plurality of neighboring cells based on a plurality of factors in the factors (1) to (4). In this case, the plurality of factors may be sorted first. When priority sorting is performed based on the 1^{st} factor, and a sequence of the plurality of neighboring cells cannot be distinguished, the plurality of neighboring cells are further sorted based on the 2^{nd} factor; and when priority sorting is performed based on the 2^{nd} factor, and a sequence of the plurality of neighboring cells cannot be distinguished, the plurality of neighboring cells are further sorted based on the 3^{rd} factor. By analogy, a final sorting result is obtained. For example, the measurement report includes channel quality of a cell 1 to a cell 5. The base station sorts the five neighboring cells in sequence based on the channel quality and transmission performance of the neighboring cells. When a channel quality factor is preferentially considered, a channel quality relationship of the five cells is: the cell 1 = the cell 2 > the cell 4 = the cell 5 > the cell 3. Then, the base station determines that the transmission performance of the cell 1 is superior to the transmission performance of the cell 2, and the transmission performance of the cell 4 is superior to the transmission performance of the cell 5. Therefore, the base station determines that a priority sorting result of the five cells is the cell 1, the cell 2, the cell 4, the cell 5, and the cell 3.

That the base station selects the target cell from the plurality of neighboring cells based on the sorting result may be specifically: The base station determines whether a band of a 1^{st} neighboring cell in the sorting result can be used for enabling the SUL communication manner. If determining that the band of the 1^{st} neighboring cell can be used for enabling the SUL communication manner, the base station determines that the 1^{st} neighboring cell is the target cell (that is, the second cell); or if determining that the band of the 1^{st} neighboring cell cannot be used for enabling the SUL communication manner, the base station determines whether a band of a 2^{nd} neighboring cell can be used for enabling the SUL communication manner. The rest may be deduced by analogy, until the target cell is determined.

Further, when the base station determines whether a band of a specific neighboring cell (referred to as a candidate neighboring cell below) is used for enabling the SUL communication manner, there may be two possible cases.

Case 1: The candidate neighboring cell is a cell controlled by the base station.

The base station maintains cell state information. The cell state information includes identifiers of a plurality of cells controlled by the base station, bands respectively corresponding to the plurality of cells, and enabling states of the bands. The base station may determine, based on the cell state information, whether a band of the candidate neighboring cell has been enabled to be used in the SUL communication manner. Further, if determining that the band of the candidate neighboring cell is not enabled to be used in the SUL communication manner, after determining that the candidate neighboring cell is in an idle state, the base station enables the band of the candidate neighboring cell to be used in the SUL communication manner, and then performs the following step 302. If determining that the band of the candidate neighboring cell has been enabled to be used in the SUL communication manner, the base station may directly perform the following step 302.

For example, the base station controls a cell A to a cell D, and enabling states respectively corresponding to the cell A to the cell D are shown in Table 7. When the enabling state is 1, it indicates that the band of the cell has been enabled to be used in the SUL communication manner. When the enabling state is 0, it indicates that the band of the cell is not enabled to be used in the SUL communication manner. The cell A is a candidate neighboring cell. If determining that a band of the cell A is not enabled to be used in the SUL communication manner, after determining that the cell A is in an idle state, the base station enables the band of the cell A to be used in the SUL communication manner. Further, the base station updates an enabling state of the cell A in the cell state information from "0" to "1".

**Table 7**

| Cell | Band | Enabling state |
|---|---|---|
| Cell A | Band A | 0 |
| Cell B | Band B | 0 |
| Cell C | Band C | 1 |
| Cell D | Band D | 1 |

Case 2: The candidate neighboring cell is not a cell controlled by the base station. That is, the candidate neighboring cell is a cell controlled by another base station. For ease of description, the base station (that is, the base station configured to manage the first cell) in step 301 is referred to as a first base station, and the base station configured to manage the candidate neighboring cell is referred to as a second base station.

The second base station maintains cell state information. The cell state information includes identifiers of a plurality of cells controlled by the second base station, bands respectively corresponding to the plurality of cells, and enabling states of the bands. After determining the candidate neighboring cell, the first base station may send an enabling request to the second base station. The enabling request may include an identifier of the candidate neighboring cell. Correspondingly, the second base station determines, based on the enabling request and the cell state information, whether the band of the candidate neighboring cell has been enabled to be used in the SUL communication manner. Further, if determining that the band of the candidate neighboring cell is not enabled to be used in the SUL communication manner, after determining that the candidate neighboring cell is in an idle state, the second base station enables the band of the candidate neighboring cell to be used in the SUL communication manner, and sends an enabling response to the first base station, so that the first base station continues to perform the following step 302. If determining that the band of the candidate neighboring cell has been enabled to be used in the SUL communication manner, the second base station sends an enabling response to the first base station, so that the first base station continues to perform the following step 302. The enabling response is used for notifying the first base station that "the band of the candidate neighboring cell has been enabled to be used in the SUL communication manner".

In the foregoing Case 1 or Case 2, that the base station (or the second base station) determines that the candidate neighboring cell is in the idle state may be specifically: determining that the candidate neighboring cell satisfies one or more of the following conditions.
(1) Uplink resource utilization of the candidate neighboring cell is lower than preset utilization. The uplink resource utilization of the candidate neighboring cell may be specifically sounding reference signal (sounding reference signal, SRS) resource utilization, PUSCH resource utilization, or physical uplink control channel (physical uplink control channel, PUCCH) resource utilization. The SRS resource utilization may be represented by a ratio of a quantity of used SRS resources to a total quantity of available SRS resources in the candidate neighboring cell. The PUSCH resource utilization may be represented by a ratio of a quantity of used PUSCH resources to a total quantity of available PUSCH resources in the candidate neighboring cell. The PUCCH resource utilization may be represented by a ratio of a quantity of used PUCCH resources to a total quantity of available PUCCH resources in the candidate neighboring cell. The total quantity of available resources includes a quantity of used resources and a quantity of unused resources.
(2) An available processing capability of the candidate neighboring cell is higher than a preset processing capability. The available processing capability of the candidate neighboring cell includes one or more of the following: a quantity of UEs that can further access the candidate neighboring cell, a remaining computing capability of a processor (for example, a central processing unit (central processing unit, CPU)) corresponding to the candidate neighboring cell, and the like. The quantity of UEs that can further access the candidate neighboring cell is a difference between a total quantity of UEs that can access the candidate neighboring cell and a quantity of UEs that have accessed the candidate neighboring cell. The total quantity of UEs that can access the candidate neighboring cell may be a minimum value in the following: a quantity of UE contexts that can be established by the candidate neighboring cell, a quantity of UEs that can be supported by an SRS in the candidate neighboring cell, a quantity of UEs that can be supported by a PUSCH in the candidate neighboring cell, and a quantity of UEs that can be supported by a PUCCH in the candidate neighboring cell.

In addition, the base station (or the second base station) may not maintain the cell state information, but directly enable the band of the candidate neighboring cell to be used in the SUL communication manner after determining that the candidate neighboring cell is in the idle state.

In a 2^{nd} example, the base station first selects, from the plurality of neighboring cells included in the measurement report of the first UE, candidate neighboring cells whose bands can be enabled to be used in the SUL communication manner, then performs priority sorting on the selected plurality of candidate neighboring cells, and then selects the target cell from the plurality of candidate neighboring cells based on a sorting result. For example, the measurement report includes channel quality of a cell 1 to a cell 5. The base station first selects, from the cell 1 to the cell 5, candidate neighboring cells (for example, the cell 1 to the cell 3) whose bands can be enabled to be used in the SUL communication manner. Then, the base station performs priority sorting on the cell 1 to the cell 3. For example, if a sorting result is the cell 1, the cell 3, and the cell 2, the base station may determine the cell 1 as the target cell.

That the base station selects, from the plurality of neighboring cells included in the measurement report of the first UE, a candidate neighboring cell whose band can be enabled to be used in the SUL communication manner may be specifically: The base station determines whether a band of each neighboring cell in the measurement report can be enabled to be used in the SUL communication manner. For a specific manner, refer to the descriptions in the foregoing 1^{st} example that the base station determines whether the SUL communication manner can be enabled in a candidate neighboring cell. Further, if determining that the band of the neighboring cell can be enabled to be used in the SUL communication manner, the base station uses the neighboring cell as the candidate neighboring cell. If determining that the band of the neighboring cell cannot be enabled to be used in the SUL communication manner, the base station filters out the neighboring cell. For a specific manner in which the base station performs priority sorting on the plurality of selected candidate neighboring cells, refer to the descriptions in the foregoing 1^{st} example that the base station performs priority sorting on the plurality of neighboring cells in the measurement report.

In a possible case, if the base station determines that a throughput of sending the uplink information by the first UE in a current slot on the NUL band of the first cell is lower than a throughput requirement of the first UE, the base station performs step 301.

In this application, a band of the target cell may be referred to as a band of the second cell, an SUL band of the first cell, an SUL band, and the like. That the band of the second cell is enabled to be used in the SUL communication manner may also be considered as that the SUL communication manner is enabled in the second cell.

Optionally, after determining that the band of the second cell is enabled to be used in the SUL communication manner, the base station (or the first base station) may further configure the band of the second cell as the SUL band for the first UE. In a specific example, the base station sends an RRC reconfiguration message to the first UE. The RRC reconfiguration message includes one or more of PUSCH configuration information corresponding to the SUL band, SRS configuration information, PUCCH configuration information, and physical random access channel (physical random access channel, PRACH) configuration information. The PUSCH configuration information includes a dedicated bandwidth that can be used by the first UE to transmit the PUSCH. Other information is similar. For details, refer to the specification in the TS 38.331 protocol.

In the foregoing configuration process, the base station may configure only the SUL band (that is, an uplink band), which helps reduce configuration complexity. The first UE may need to monitor only a PDCCH of the first cell, which helps implement UE energy saving. The first UE does not access the second cell, that is, for the second cell, a quantity of accessed UEs is not increased. In this way, a total quantity of UEs that can be accommodated by the second cell is not affected. If the first UE does not access the second cell, downlink resource consumption of the second cell does not increase.

Step 302: The base station sends scheduling information to the first UE.

Correspondingly, the first UE receives the scheduling information from the base station.

The scheduling information indicates the first UE to send the uplink information to the base station on the SUL band of the first cell (that is, the band of the second cell) in the SUL communication manner. The scheduling information may be specifically DCI carried on a PDCCH.

The base station may schedule the first UE to send the uplink information on the band of the first cell and the band of the second cell in a time division manner, or send the uplink information on the band of the first cell and the band of the second cell in parallel. For details, refer to the following two implementations.

### Implementation 1: Time-division sending

For a slot (denoted as a first slot), the base station selects, from the NUL band of the first cell and the SUL band of the first cell, a band with a good transmission capability as a band for the first UE to transmit the uplink information.

In a 1^{st} specific example, the base station predicts a first transmission capability of sending the uplink information by the first UE on the NUL band of the first cell in the first slot and a second transmission capability of sending the uplink information by the first UE on the SUL band of the first cell in the first slot. Further, when determining that the first transmission capability is superior to the second transmission capability, the base station generates scheduling information (denoted as first scheduling information), and sends the first scheduling information to the first UE. The first scheduling information indicates the first UE to send the uplink information to the base station on the NUL band of the first cell in the first slot. When determining that the second transmission capability is superior to the first transmission capability, the base station generates first scheduling information, and sends the first scheduling information to the first UE. The first scheduling information indicates the first UE to send the uplink information to the base station on the SUL band of the first cell in the first slot.

That the base station predicts the first transmission capability may be specifically: The base station determines, based on the NUL band of the first cell and throughput requirements of a plurality of UEs (including the first UE) that currently access the first cell, an available uplink bandwidth that corresponds to the first cell and that is used by the first UE to send the uplink information; and the base station determines, based on quality of a channel between the first cell and the first UE, a modulation order, coding efficiency, and a RANK that correspond to the first cell and that are used by the first UE to send the uplink information. Then, the base station determines the first transmission capability based on the available uplink bandwidth, the modulation order, the coding efficiency, and the RANK that correspond to the first cell and that are used by the first UE to send the uplink information. For an implementation in which the base station predicts the second transmission capability, refer to the foregoing implementation in which the base station predicts the first transmission capability. The "first cell" may be replaced with the "second cell" for understanding.

In a 2^{nd} specific example, when determining that the first UE is located at or near a cell center, the base station sends first scheduling information to the first UE. The first scheduling information indicates the first UE to send the uplink information to the base station on the NUL band of the first cell in the first slot. When determining that the first UE is located away from the cell center, the base station sends first scheduling information to the first UE. The first scheduling information indicates the first UE to send the uplink information to the base station on the SUL band of the first cell in the first slot.

For example, the first UE measures a reference signal of the first cell to obtain channel quality of the first cell, and reports the channel quality of the first cell to the base station. Then, when determining that the channel quality of the first cell is greater than a channel quality threshold, the base station determines that the first UE is located at or near the cell center; and when determining that the channel quality of the first cell is less than or equal to the channel quality threshold, the base station determines that the first UE is located away from the cell center. Alternatively, when determining that the channel quality of the first cell is greater than or equal to a channel quality threshold, the base station determines that the first UE is located at or near the cell center; and when determining that the channel quality of the first cell is less than the channel quality threshold, the base station determines that the first UE is located away from the cell center.

FIG. 7 is a diagram of a scenario in which the base station schedules, based on a position of a UE, the UE to send the uplink information. The base station controls a cell 1 and a cell 2, and both a UE 1 and a UE 2 access the cell 1. In other words, the cell 1 is a serving cell of the UE 1 and the UE 2, and a band of the cell 2 configured by the base station is an SUL band of the cell 1. Further, the base station determines, based on quality of a channel between the UE 1 and the cell 1, that the UE 1 is located at or near the cell center, and schedules the UE 1 to send the uplink information to the base station on a NUL band of the cell 1. The base station determines, based on quality of a channel between the UE 2 and the cell 1, that the UE 2 is located away from the cell center, and schedules the UE 2 to send the uplink information to the base station on the SUL band of the cell 1.

For example, the first scheduling information includes a resource indication. The resource indication indicates a time-domain resource and a frequency-domain resource. The time-domain resource and the frequency-domain resource may be used by the first UE to send the uplink information to the base station. For example, the frequency-domain resource is included in the dedicated bandwidth of the foregoing PUSCH. For example, the scheduling information may further include one or more of the following: a hybrid automatic repeat request (hybrid automatic repeat request, HARQ) process number, a modulation and coding scheme (modulation and coding scheme, MCS), and precoding information.

### Implementation 2: Parallel sending

For a slot (denoted as a second slot), the base station generates scheduling information (denoted as second scheduling information), and sends the second scheduling information to the first UE. The second scheduling information indicates the first UE to send first uplink information to the base station on the NUL band of the first cell in the second slot, and send the second uplink information to the base station on the SUL band of the first cell in the second slot. Fields included in the second scheduling information are similar to fields included in the first scheduling information.

Step 303: The first UE sends the uplink information on the SUL band of the first cell (that is, the band of the second cell) in the SUL communication manner based on the scheduling information. The uplink information may be carried on the PUSCH.

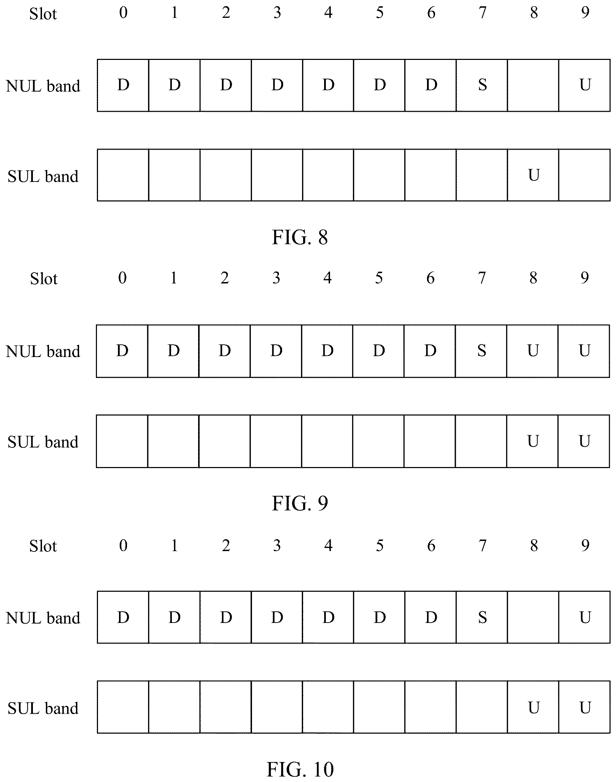

Example 1: In the first slot, the first UE sends the uplink information to the base station on the NUL band of the first cell (or the SUL band of the first cell) based on the first scheduling information. FIG. 8 shows a manner of information transmission between the first UE and the base station according to an example of this application. The first slot may be a slot 8 or a slot 9. Specifically, in the slot 8, the second transmission capability is superior to the first transmission capability, and the first UE sends the uplink information on the SUL band of the first cell. In the slot 9, the first transmission capability is superior to the second transmission capability, and the first UE sends the uplink information on the NUL band of the first cell.

Example 2: In the second slot, the first UE sends the first uplink information to the base station on the NUL band of the first cell, and the first UE sends the second uplink information to the base station on the SUL band of the first cell. FIG. 9 shows another manner of information transmission between the first UE and the base station according to an example of this application. The second slot may be a slot 8 or a slot 9. For example, in the slot 8, the first UE may send the uplink information in parallel. To be specific, the first UE may transmit the first uplink information on the NUL band of the first cell, and transmit the second uplink information on the SUL band of the first cell.

Certainly, parallel sending and time-division sending may alternatively coexist. For example, in the slot 8, the second transmission capability is superior to the first transmission capability, and the first UE sends the uplink information on the SUL band of the first cell. In the slot 9, the first UE may transmit the first uplink information on the NUL band of the first cell, and transmit the second uplink information on the SUL band of the first cell. For details, refer to FIG. 10.

It should be supplemented that the second cell may also be used as a serving cell of a second UE, in other words, the second UE can transmit information (including the uplink information and downlink information) to the base station on the band of the second cell. It may be understood that an uplink resource of the second cell is shared by the first UE and the second UE. Depending on whether the band of the second cell is the TDD band or the FDD band, the following describes manners of information transmission by two UEs in different cases.

It should be noted in advance that the following is described from two dimensions: A dimension 1 describes how the base station schedules the first UE to send the uplink information on the NUL band of the first cell and/or the SUL band of the first cell (that is, the band of the second cell); and a dimension 2 describes how the base station allocates the uplink resource of the second cell to the first UE and the second UE.

For ease of description, the following uses an example in which the band of the first cell is the TDD band for description, the NUL band of the first cell is referred to as a NUL band for short, and the SUL band of the first cell is referred to as an SUL band for short.

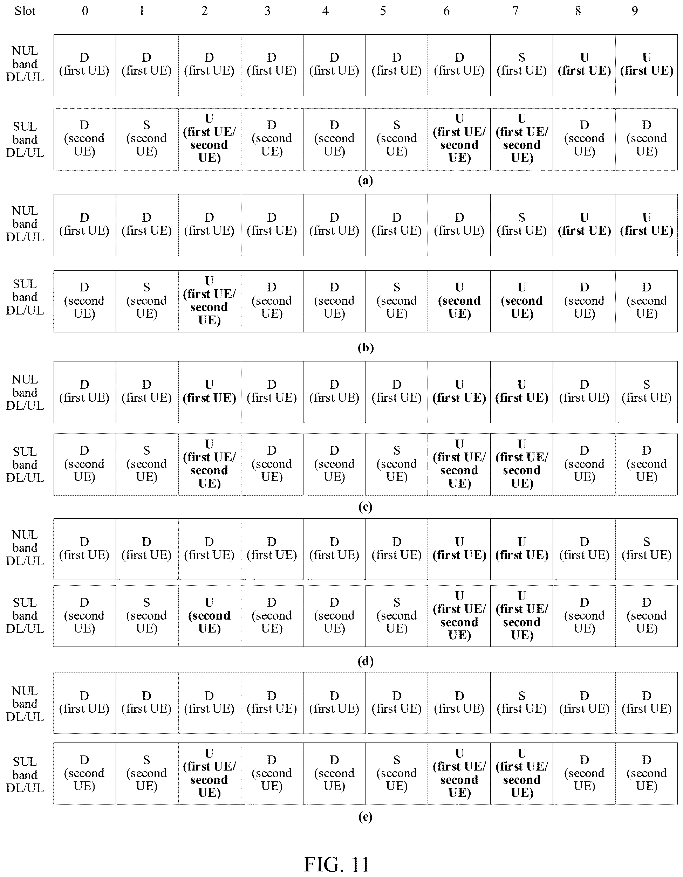

When the band of the second cell is the TDD band:
Example 1: The base station schedules the first UE to send the uplink information on the NUL band and the SUL band in a time division manner, and the base station schedules the first UE and the second UE to share all uplink slot resources of the second cell. With reference to (a) in FIG. 11, in a slot 2, a slot 6, or a slot 7, the base station schedules the first UE to send the uplink information on the SUL band; and in a slot 8 or a slot 9, the base station schedules the first UE to send the uplink information on the NUL band. Further, the base station schedules the first UE and the second UE to share all uplink slot resources (for example, the slot 2, the slot 6, and the slot 7) of the second cell.
Example 2: The base station schedules the first UE to send the uplink information on the NUL band and the SUL band in a time division manner, and the base station schedules the first UE and the second UE to share a part of uplink slot resources of the second cell, and schedules the second UE to exclusively use another part of the uplink slot resources of the second cell. With reference to (b) in FIG. 11, in a slot 2, the base station schedules the first UE to send the uplink information on the SUL band; and in a slot 8 or a slot 9, the base station schedules the first UE to send the uplink information on the NUL band. Further, the base station schedules the first UE and the second UE to share the slot 2 of the second cell, and schedules the second UE to exclusively use a slot 6 and a slot 7 of the second cell.
Example 3: The base station schedules the first UE to send the uplink information in parallel on the NUL band and the SUL band, and the base station schedules the first UE and the second UE to share all uplink slot resources of the second cell. With reference to (c) in FIG. 11, in a slot 2, a slot 6, or a slot 7, the base station schedules the first UE to send the first uplink information on the NUL band, and send the second uplink information on the SUL band. Further, the base station schedules the first UE and the second UE to share all uplink slot resources (for example, the slot 2, the slot 6, and the slot 7) of the second cell.
Example 4: The base station schedules the first UE to send the uplink information in parallel on the NUL band and the SUL band, and the base station schedules the first UE and the second UE to share a part of uplink slot resources of the second cell, and schedules the second UE to exclusively use another part of the uplink slot resources of the second cell. With reference to (d) in FIG. 11, in a slot 6 or a slot 7, the base station schedules the first UE to send the first uplink information on the NUL band and send the second uplink information on the SUL band. Further, the base station schedules the first UE and the second UE to share the slot 6 and the slot 7 of the second cell, and schedules the second UE to exclusively use a slot 2 of the second cell.
Example 5: The base station schedules the first UE to send the uplink information only on the SUL band, and not to send the uplink information on the NUL band, and the base station schedules the first UE and the second UE to share all uplink slot resources of the second cell. With reference to (e) in FIG. 11, the base station schedules the first UE to send the uplink information on uplink slot resources (for example, a slot 2, a slot 6, or a slot 7) of the SUL band. Further, the base station schedules the first UE and the second UE to share all uplink slot resources (for example, the slot 2, the slot 6, and the slot 7) of the second cell.

It should be supplemented that the foregoing is merely an example of a manner in which the base station schedules, when the band of the second cell is the TDD band, the first UE or the second UE to send the uplink information. Certainly, there may be another manner. Examples are not provided one by one in this application.

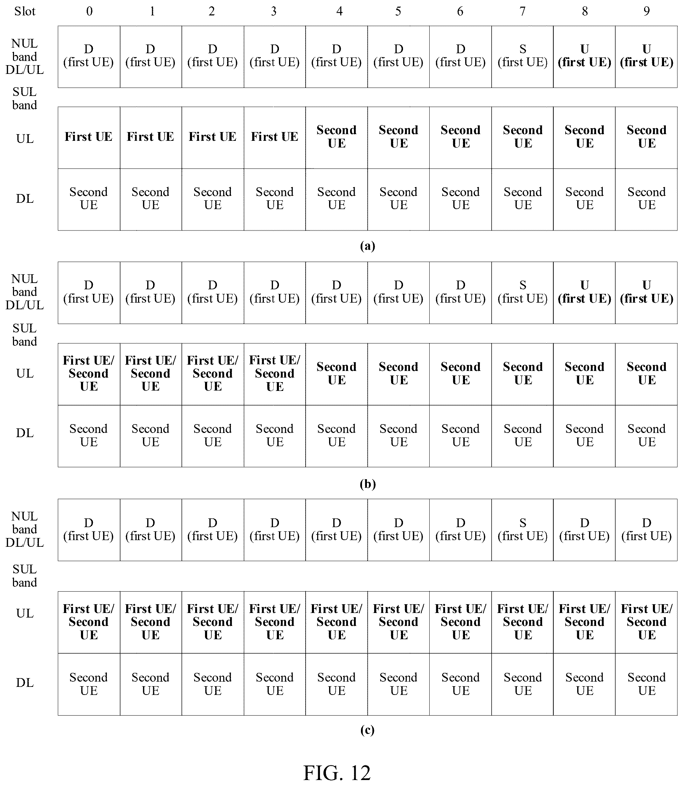

When the band of the second cell is the FDD band:
Example 1: The base station schedules the first UE to send the uplink information on the NUL band and the SUL band in a time division manner, and the base station schedules the first UE to exclusively use a part of uplink slot resources of the second cell, and schedules the second UE to exclusively use another part of the uplink slot resources of the second cell. With reference to (a) in FIG. 12, in a slot 0 to a slot 3, the base station schedules the first UE to send the uplink information on the SUL band; and in a slot 8 and a slot 9, the base station schedules the first UE to send the uplink information on the NUL band. Further, the base station schedules the first UE to exclusively use the slot 0 to the slot 3 of the second cell, and schedules the second UE to exclusively use a slot 4 to the slot 9 of the second cell.
Example 2: The base station schedules the first UE to send the uplink information on the NUL band and the SUL band in a time division manner, and the base station schedules the first UE and the second UE to share a part of uplink slot resources of the second cell, and schedules the second UE to exclusively use another part of the uplink slot resources of the second cell. With reference to (b) in FIG. 12, in a slot 0 to a slot 3, the base station schedules the first UE to send the uplink information on the SUL band; and in a slot 8 and a slot 9, the base station schedules the first UE to send the uplink information on the NUL band. Further, the base station schedules the first UE and the second UE to share the slot 0 to the slot 3 of the second cell, and schedules the second UE to exclusively use a slot 4 to the slot 9 of the second cell.
Example 3: The base station schedules the first UE to send the uplink information only on the SUL band, and not to send the uplink information on the NUL band, and the base station schedules the first UE and the second UE to share all uplink slot resources of the second cell. With reference to (c) in FIG. 12, the base station schedules the first UE and the second UE to share a slot 0 to a slot 9 of the second cell.

It should be supplemented that the foregoing is merely an example of a manner in which the base station schedules, when the band of the second cell is the FDD band, the first UE or the second UE to send the uplink information. Certainly, there may be another manner. Examples are not provided one by one in this application.

Further, when scheduling the first UE and the second UE to share a specific uplink slot resource of the second cell, the base station may further distinguish, in frequency domain and/or space domain, the uplink information sent by the first UE and the uplink information sent by the second UE.

Implementation A: The uplink information sent by the first UE and the uplink information sent by the second UE are distinguished in frequency domain.

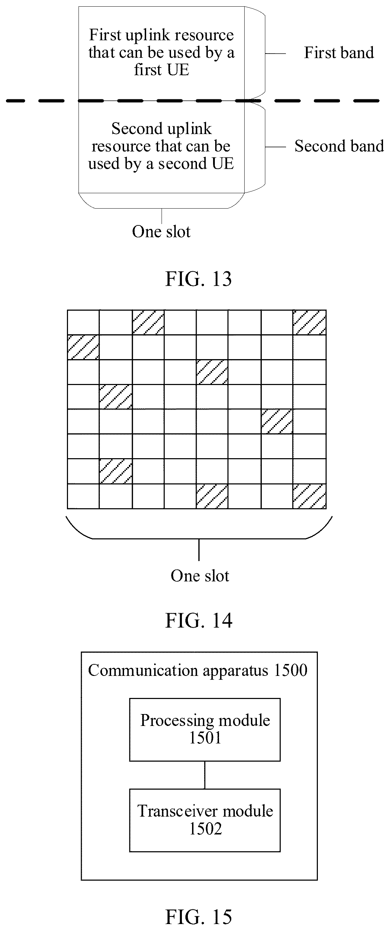

FIG. 13 shows an example of a diagram of resource allocation. The base station schedules the first UE and the second UE to share a specific uplink slot resource of the second cell. Further, the base station schedules the first UE to send the uplink information to the base station by using a first uplink resource to which a slot and a first band jointly correspond. The base station schedules the second UE to send the uplink information to the base station by using a second uplink resource to which a slot and a second band jointly correspond. The first band and the second band are respectively different subbands on the band corresponding to the second cell.

Further, the base station may dynamically adjust, based on service transmission requirements of the first UE and the second UE, a ratio of a quantity of resources included in the first uplink resource to a quantity of resources included in the second uplink resource. The quantity of resources herein is, for example, a quantity of physical resource blocks (physical resource block, PRB).

Optionally, there may be no apparent boundary between the first uplink resource and the second uplink resource. For example, FIG. 14 shows an example of another diagram of resource allocation. A shaded part is the first uplink resource, and an unshaded part is the second uplink resource.

Implementation B: The uplink information sent by the first UE and the uplink information sent by the second UE are distinguished in space domain.

The base station includes a plurality of receive antennas, and each receive antenna is configured to receive uplink information from a UE. The base station may allocate a first antenna in the plurality of receive antennas to receive the uplink information from the first UE; and the base station allocates a second antenna in the plurality of receive antennas to receive the uplink information from the second UE. The first antenna is different from the second antenna. There may be one or more first antennas, and there may be one or more second antennas.

In the foregoing technical solution, a TDD band or an FDD band defined in the existing 3GPP protocol is enabled to be used in an SUL communication manner, and an SUL band combination is newly defined for the TDD band or the FDD band, or a CA band combination in which the TDD band or the FDD band is used as a band of a secondary cell is used as the SUL band combination. In this way, an optional range of an SUL band that can be used when the base station communicates with the first UE in the SUL communication manner is expanded.

When the base station communicates with a first UE in the SUL communication manner, there are mainly the following three procedures:
Procedure 1: The base station and the first UE negotiate a target SUL band that is supported by both the base station and the first UE and that corresponds to a NUL band of a first cell.

There are specifically the following two manners.

Manner 1: The base station may determine, based on the NUL band of the first cell and these SUL band combinations, a candidate SUL band (which may be denoted as a candidate SUL band of the first cell) corresponding to the NUL band of the first cell. There may be one or more candidate SUL bands of the first cell. The base station sends the one or more candidate SUL bands to the first UE. Correspondingly, the first UE selects, from the one or more candidate SUL bands, a candidate SUL band (denoted as a target SUL band) supported by the first UE. There may be one or more target SUL bands. The first UE sends capability information of the first UE to the base station. The capability information of the first UE indicates that the first UE supports using the one or more target SUL bands as bands of the SUL communication manner.

Manner 2: The first UE sends capability information of the first UE to the base station. The capability information of the first UE includes one or more candidate SUL bands supported by the first UE and indication information corresponding to the candidate SUL band. The indication information indicates that the first UE supports using these candidate SUL bands as bands of SUL communication. Correspondingly, the base station selects, from the one or more candidate SUL bands based on the NUL band of the first cell and the SUL band combinations, a candidate SUL band (denoted as a target SUL band) supported by the base station. There may be one or more target SUL bands.

For content that is not described in detail in Manner 1, refer to the descriptions in the related embodiment in FIG. 4. For content that is not described in detail in Manner 2, refer to the descriptions in the related embodiment in FIG. 5.

Procedure 2: The base station selects, from a plurality of neighboring cells of the first cell, a second cell on the target SUL band. A band (that is, the target SUL band) of the second cell can be used as the target SUL band for communication between the first UE and the base station.

The base station indicates the first UE to measure channel quality of one or more neighboring cells of the first cell that are on each target SUL band, so as to select, from the neighboring cells, neighboring cells whose channel quality is greater than a channel quality threshold. The first UE reports a measurement report carrying the channel quality of the selected neighboring cells to the base station. Further, the base station selects the second cell from the plurality of neighboring cells based on the channel quality of the plurality of neighboring cells in the measurement report. In an example, the base station sorts the plurality of neighboring cells in the measurement report in descending order of priorities, and determines, in sequence based on a sorting result, whether a band of each neighboring cell can be used as the target SUL band for communication between the first UE and the base station, until the target SUL band used for communication between the first UE and the base station is determined. Correspondingly, the determined neighboring cell is the second cell. In still another example, the base station first selects, from the plurality of neighboring cells included in the measurement report, neighboring cells whose bands can be used as the target SUL band for communication between the first UE and the base station, then sorts these neighboring cells in descending order of priorities, and uses a 1^{st} neighboring cell in a sorting result as the second cell. When the base station sorts the plurality of neighboring cells in descending order of priorities, sorting may be specifically performed based on one or more of the following: channel quality of the neighboring cells, transmission performance of the neighboring cells, whether the bands of the neighboring cells are the same as a band of the first cell, and whether the neighboring cells and the first cell belong to a same base station. When determining whether the band of the neighboring cell can be used as the target SUL band for communication between the first UE and the base station, the base station may specifically determine whether the neighboring cell is in an idle state.

For content that is not described in detail, refer to the descriptions in the related embodiment in FIG. 6.

Procedure 3: The base station may send scheduling information to the first UE. The scheduling information indicates the first UE to send the uplink information to the base station on the selected band of the second cell in an SUL communication manner. In this application, the band of the second cell may be understood as a target SUL band used when the base station communicates with the first UE in the SUL communication manner, or referred to as a target SUL band of the first UE, or referred to as a target SUL band of the first cell.

In this way, when communicating with the first UE in the SUL communication manner, the base station can select, from more SUL bands, a target SUL band used for the SUL communication manner, thereby helping resolve a problem that there are SUL bands of small quantity defined in a 3GPP protocol. Further, this helps improve uplink throughput rates of a cell and a user, and improve resource utilization in a communication system.

Embodiments described in this specification may be independent solutions, or may be combined based on internal logic. All of these solutions fall within the protection scope of this application.

In the foregoing embodiments provided in this application, the methods provided in embodiments of this application are separately described from a perspective of interaction between the devices. To implement functions in the foregoing method provided in embodiments of this application, the UE and the access network device may include a hardware structure and/or a software module, and the foregoing functions are implemented in a form of hardware structure, software module, or combination of a hardware structure and a software module. Whether a specific function in the foregoing functions is performed by using the hardware structure, the software module, or the combination of the hardware structure and the software module depends on particular applications and design constraint conditions of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in the form of hardware, or may be implemented in the form of a software functional module.

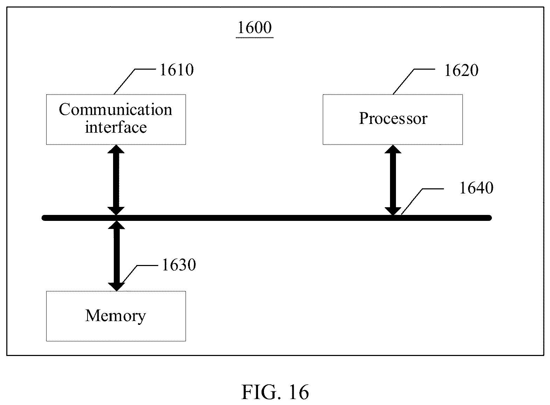

Based on the foregoing content and a same concept, FIG. 15 and FIG. 16 each are a diagram of a possible structure of a communication apparatus according to this application. These communication apparatuses may be configured to implement functions of the access network device or the first UE in the foregoing method embodiments, and therefore can also implement beneficial effects of the foregoing method embodiments.

In this application, the communication apparatus may be the access network device shown in FIG. 2, or may be the UE shown in FIG. 2, or may be a module (such as a chip) used in the access network device or the UE.

As shown in FIG. 15, the communication apparatus 1500 includes a processing module 1501 and a transceiver module 1502. The communication apparatus 1500 is configured to implement the functions of the access network device (for example, the base station) or the first UE in the method embodiments shown in FIG. 3 to FIG. 6.

When the communication apparatus 1500 is configured to implement the functions of the access network device in the method embodiments shown in FIG. 3 to FIG. 6:
The processing module 1501 is configured to determine a band of a second cell that can be used as an SUL band of a first UE, where a serving cell of the first UE is a first cell, the second cell is a neighboring cell of the first cell, and the band of the second cell is a TDD band or an FDD band; and the transceiver module 1502 is configured to send scheduling information to the first UE, where the scheduling information indicates the first UE to send uplink information on the band of the second cell in an SUL communication manner.

In a possible implementation, when determining the band of the second cell that can be used as the SUL band of the first UE, the processing module 1501 is specifically configured to: determine the band of the second cell based on a band of the first cell and a correspondence between the band of the first cell and the band of the second cell; and control the transceiver module 1502 to broadcast the band of the second cell in the first cell, and receive capability information from the first UE, where the capability information indicates that the first UE supports using the band of the second cell as the SUL band.

In a possible implementation, when determining the band of the second cell that can be used as the SUL band of the first UE, the processing module 1501 is specifically configured to control the transceiver module 1502 to receive capability information from the first UE, where the capability information includes the band of the second cell and indication information, and the indication information indicates that the first UE supports using the band of the second cell as the SUL band; and determine, based on the capability information of the first UE, a band of the first cell, and a correspondence between the band of the first cell and the band of the second cell, the band of the second cell that can be used as the SUL band of the first UE.

In a possible implementation, the capability information further includes a full capability of sending the uplink information by the first UE when the band of the second cell is used as the SUL band. In a possible implementation, the capability information further includes a difference between a capability of sending the uplink information by the first UE when the band of the second cell is used as the SUL band and a capability of sending the uplink information by the first UE when the band of the second cell is used as the TDD band or the FDD band.

In a possible implementation, before determining the band of the second cell that can be used as the SUL band of the first UE, the processing module 1501 is further configured to: control the transceiver module 1502 to send measurement indication information to the first UE, where the measurement indication information indicates the first UE to measure channel quality of the second cell; control the transceiver module 1502 to receive the channel quality of the second cell from the first UE; and determine that the channel quality of the second cell is greater than a channel quality threshold.

In a possible implementation, the scheduling information indicates the first UE to send the uplink information on the band of the second cell in the SUL communication manner in a first slot; and before the transceiver module 1502 sends the scheduling information to the first UE, the processing module 1501 is further configured to predict a first transmission capability of sending the uplink information by the first UE on the band of the first cell in the first slot and a second transmission capability of sending the uplink information by the first UE on the band of the second cell in the first slot; and determine that the second transmission capability is superior to the first transmission capability.

In a possible implementation, the uplink information includes first uplink information and second uplink information, and the scheduling information indicates the first UE to send the first uplink information on the band of the first cell in a second slot, and indicates the first UE to send the second uplink information on the band of the second cell in the SUL communication manner in the second slot.

In a possible implementation, the second cell is a serving cell of a second UE, and an uplink resource of the second cell is shared by the first UE and the second UE.

In a possible implementation, before determining the band of the second cell that can be used as the SUL band of the first UE, the processing module 1501 is further configured to determine that one or more of the following conditions are satisfied: A throughput of sending the uplink information by the first UE on the band of the first cell is lower than a throughput requirement of the first UE; uplink resource utilization of the second cell is lower than preset utilization; and an available processing capability of the second cell is higher than a preset processing capability.

When the communication apparatus 1500 is configured to implement the functions of the first UE in the method embodiments shown in FIG. 3 to FIG. 6:
The transceiver module 1502 is configured to receive scheduling information from an access network device, where the scheduling information is generated after the access network device determines a band of a second cell that can be used as an SUL band of the first UE, the second cell is a neighboring cell of the first cell, and the band of the second cell is a TDD band or an FDD band. The processing module 1501 is configured to control, based on the scheduling information, the transceiver module 1502 to send uplink information on a band of the second cell in an SUL communication manner.

In a possible implementation, before receiving the scheduling information from the access network device, the transceiver module 1502 is further configured to: receive the band of the second cell that is broadcast by the access network device in the first cell; and send capability information of the first UE, where the capability information indicates that the first UE supports using the band of the second cell as the SUL band.

In a possible implementation, before receiving the scheduling information from the access network device, the transceiver module 1502 is further configured to send capability information of the first UE, where the capability information includes the band of the second cell and indication information, and the indication information indicates that the first UE supports using the band of the second cell as the SUL band.

In a possible implementation, the capability information further includes a full capability of sending the uplink information by the first UE when the band of the second cell is used as the SUL band. In a possible implementation, the capability information further includes a difference between a capability of sending the uplink information by the first UE when the band of the second cell is used as the SUL band and a capability of sending the uplink information by the first UE when the band of the second cell is used as the TDD band or the FDD band.

In a possible implementation, before receiving the scheduling information from the access network device, the transceiver module 1502 further receives measurement indication information from the access network device; obtains channel quality of the second cell through measurement based on the measurement indication information; and sends the channel quality of the second cell to the access network device, where the channel quality of the second cell is greater than a channel quality threshold.

In a possible implementation, the scheduling information indicates to send the uplink information on the band of the second cell in the SUL communication manner in a first slot; and in the first slot, a second transmission capability of sending the uplink information on the band of the second cell is superior to a first transmission capability of sending the uplink information on a band of the first cell. In a possible implementation, the uplink information includes first uplink information and second uplink information, and the scheduling information indicates to send the first uplink information on the band of the first cell in a second slot, and send the second uplink information on the band of the second cell in the SUL communication manner in the second slot.

Based on the foregoing content and a same concept, FIG. 16 shows an apparatus 1600 according to an embodiment of this application. The apparatus shown in FIG. 16 may be an implementation of a hardware circuit of the apparatus shown in FIG. 15. The apparatus is configured to implement the functions of the access network device (for example, the base station) or the first UE in the method embodiments shown in FIG. 3 to FIG. 6.

For ease of description, FIG. 16 shows only main components of the apparatus.

The apparatus 1600 shown in FIG. 16 includes a communication interface 1610, a processor 1620, and a memory 1630. The memory 1630 is configured to store program instructions and/or data. The processor 1620 may cooperate with the memory 1630. The processor 1620 may execute the program instructions stored in the memory 1630. When the instructions or a program stored in the memory 1630 is executed, the processor 1620 is configured to perform an operation performed by the processing module 1501 in the foregoing embodiments, and the communication interface 1610 is configured to perform an operation performed by the transceiver module 1502 in the foregoing embodiments.

The memory 1630 is coupled to the processor 1620. The coupling in this embodiment of this application may be an indirect coupling or a communication connection between apparatuses, units, or modules in an electrical form, a mechanical form, or another form, and is used for information exchange between the apparatuses, the units, or the modules. At least one of the memories 1630 may be included in the processor 1620.

In this embodiment of this application, the communication interface may be a transceiver, a circuit, a bus, a module, or a communication interface of another type. In embodiments of this application, when the communication interface is the transceiver, the transceiver may include an independent receiver and an independent transmitter, or may be a transceiver integrated with a transceiver function or a communication interface.

The apparatus 1600 may further include a communication line 1640. The communication interface 1610, the processor 1620, and the memory 1630 may be interconnected through the communication line 1640. The communication line 1640 may be a peripheral component interconnect (peripheral component interconnect, PCI for short) bus, an extended industry standard architecture (extended industry standard architecture, EISA for short) bus, or the like. The communication line 1640 may be classified into an address bus, a data bus, a control bus, and the like. For ease of representation, only one bold line is used in FIG. 16 for representation, but this does not mean that there is only one bus or only one type of bus.

Based on the foregoing content and a same concept, an embodiment of this application provides a chip system, including a processor. The processor is coupled to a memory. The memory is configured to store a program or instructions. When the program or the instructions are executed by the processor, the chip system is caused to implement the functions of the access network device (for example, the base station) or the first UE in the method embodiments shown in FIG. 3 to FIG. 6.

Based on the foregoing content and a same concept, an embodiment of this application provides a computer-readable storage medium. The computer-readable storage medium stores a computer program or instructions. When the computer program or the instructions are executed by a communication apparatus, the communication apparatus implements the functions of the access network device (for example, the base station) or the first UE in the method embodiments shown in FIG. 3 to FIG. 6.

Based on the foregoing content and a same concept, an embodiment of this application provides a computer program product. When a communication apparatus reads and executes the computer program product, the communication apparatus implements the functions of the access network device (for example, the base station) or the first UE in the method embodiments shown in FIG. 3 to FIG. 6.

Based on the foregoing content and a same concept, an embodiment of this application provides a communication system. The communication system includes the access network device (for example, the base station) and the first UE in the method embodiments shown in FIG. 3 to FIG. 6. Optionally, the communication system may further include the second UE in the method embodiments shown in FIG. 3 to FIG. 6.

Based on the foregoing content and a same concept, an embodiment of this application provides a communication method. The communication method includes: An access network device (for example, a base station) determines a band of a second cell that can be used as an SUL band of a first UE, where a serving cell of the first UE is a first cell, the second cell is a neighboring cell of the first cell, and the band of the second cell is a TDD band or an FDD band; and the access network device sends scheduling information to the first UE, where the scheduling information indicates the first UE to send uplink information on the band of the second cell in an SUL communication manner. Correspondingly, the first UE receives the scheduling information from the access network device, and sends the uplink information on the band of the second cell in the SUL communication manner based on the scheduling information.

In this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. "And/or" describes an association relationship between associated objects and represents that three relationships may exist. For example, A and/or B may indicate the following three cases: Only A exists, both A and B exist, and only B exists, where A and B may be in a singular form or a plural form. In the text descriptions of this application, the character "/" generally represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the protection scope of this application. In this way, provided that these modifications and variations made to this application fall within the scope of the claims of this application and equivalent techniques thereof, this application is also intended to cover such modifications and variations.

## Claims

1. A communication method, comprising:
determining a band of a second cell that can be used as a supplementary uplink SUL band of a first user equipment UE, wherein a serving cell of the first UE is a first cell, the second cell is a neighboring cell of the first cell, and the band of the second cell is a time division duplex TDD band or a frequency division duplex FDD band; and
sending scheduling information to the first UE, wherein the scheduling information indicates the first UE to send uplink information on the band of the second cell in an SUL communication manner.

2. The method according to claim 1, wherein the determining the band of the second cell that can be used as the SUL band of the first UE comprises:
determining the band of the second cell based on a band of the first cell and a correspondence between the band of the first cell and the band of the second cell;
broadcasting the band of the second cell in the first cell; and
receiving capability information from the first UE, wherein the capability information indicates that the first UE supports using the band of the second cell as the SUL band.

3. The method according to claim 1, wherein the determining the band of the second cell that can be used as the SUL band of the first UE comprises:
receiving capability information from the first UE, wherein the capability information comprises the band of the second cell and indication information, and the indication information indicates that the first UE supports using the band of the second cell as the SUL band; and
determining, based on the capability information of the first UE, a band of the first cell, and a correspondence between the band of the first cell and the band of the second cell, the band of the second cell that can be used as the SUL band of the first UE.

4. The method according to claim 2 or 3, wherein the capability information further comprises a full capability of sending the uplink information by the first UE when the band of the second cell is used as the SUL band.

5. The method according to claim 2 or 3, wherein the capability information further comprises a difference between a capability of sending the uplink information by the first UE when the band of the second cell is used as the SUL band and a capability of sending the uplink information by the first UE when the band of the second cell is used as the TDD band or the FDD band.

6. The method according to any one of claims 1 to 5, wherein before the determining the band of the second cell that can be used as the SUL band of the first UE, the method further comprises:
sending measurement indication information to the first UE, wherein the measurement indication information indicates the first UE to measure channel quality of the second cell;
receiving the channel quality of the second cell from the first UE; and
determining that the channel quality of the second cell is greater than a channel quality threshold.

7. The method according to any one of claims 1 to 6, wherein
the scheduling information indicates the first UE to send the uplink information on the band of the second cell in the SUL communication manner in a first slot; and
before the sending the scheduling information to the first UE, the method further comprises:
predicting a first transmission capability of sending the uplink information by the first UE on the band of the first cell in the first slot and a second transmission capability of sending the uplink information by the first UE on the band of the second cell in the first slot; and
determining that the second transmission capability is superior to the first transmission capability.

8. The method according to any one of claims 1 to 7, wherein
the uplink information comprises first uplink information and second uplink information, and the scheduling information indicates the first UE to send the first uplink information on the band of the first cell in a second slot, and indicates the first UE to send the second uplink information on the band of the second cell in the SUL communication manner in the second slot.

9. The method according to any one of claims 1 to 8, wherein the second cell is a serving cell of a second UE, and an uplink resource of the second cell is shared by the first UE and the second UE.

10. The method according to any one of claims 1 to 9, wherein before the determining the band of the second cell that can be used as the SUL band of the first UE, the method further comprises:
determining that one or more of the following conditions are satisfied:
a throughput of sending the uplink information by the first UE on the band of the first cell is lower than a throughput requirement of the first UE;
uplink resource utilization of the second cell is lower than preset utilization; and
an available processing capability of the second cell is higher than a preset processing capability.

11. A communication method, applicable to a first user equipment UE, wherein a serving cell of the first UE is a first cell, and the method comprises:
receiving scheduling information from an access network device, wherein the scheduling information is generated after the access network device determines a band of a second cell that can be used as a supplementary uplink SUL band of the first UE, the second cell is a neighboring cell of the first cell, and the band of the second cell is a time division duplex TDD band or a frequency division duplex FDD band; and
sending uplink information on the band of the second cell in an SUL communication manner based on the scheduling information.

12. The method according to claim 11, wherein before the receiving the scheduling information from the access network device, the method further comprises:
receiving the band of the second cell that is broadcast by the access network device in the first cell; and
sending capability information of the first UE, wherein the capability information indicates that the first UE supports using the band of the second cell as the SUL band.

13. The method according to claim 11, wherein before the receiving the scheduling information from the access network device, the method further comprises:
sending capability information of the first UE, wherein the capability information comprises the band of the second cell and indication information, and the indication information indicates that the first UE supports using the band of the second cell as the SUL band.

14. The method according to claim 12 or 13, wherein the capability information further comprises a full capability of sending the uplink information by the first UE when the band of the second cell is used as the SUL band.

15. The method according to claim 12 or 13, wherein the capability information further comprises a difference between a capability of sending the uplink information by the first UE when the band of the second cell is used as the SUL band and a capability of sending the uplink information by the first UE when the band of the second cell is used as the TDD band or the FDD band.

16. The method according to any one of claims 11 to 15, wherein before the receiving the scheduling information from the access network device, the method further comprises:
receiving measurement indication information from the access network device;
obtaining channel quality of the second cell through measurement based on the measurement indication information; and
sending the channel quality of the second cell to the access network device, wherein the channel quality of the second cell is greater than a channel quality threshold.

17. The method according to any one of claims 11 to 16, wherein
the scheduling information indicates to send the uplink information on the band of the second cell in the SUL communication manner in a first slot; and in the first slot, a second transmission capability of sending the uplink information on the band of the second cell is superior to a first transmission capability of sending the uplink information on a band of the first cell.

18. The method according to any one of claims 11 to 17, wherein
the uplink information comprises first uplink information and second uplink information, and the scheduling information indicates to send the first uplink information on the band of the first cell in a second slot, and send the second uplink information on the band of the second cell in the SUL communication manner in the second slot.

19. A communication apparatus, comprising a module configured to perform the method according to any one of claims 1 to 10, or a module configured to perform the method according to any one of claims 11 to 18.

20. A communication method, comprising:
determining, by an access network device, a band of a second cell that can be used as a supplementary uplink SUL band of a first user equipment UE, wherein a serving cell of the first UE is a first cell, the second cell is a neighboring cell of the first cell, and the band of the second cell is a time division duplex TDD band or a frequency division duplex FDD band; and sending scheduling information to the first UE, wherein the scheduling information indicates the first UE to send uplink information on the band of the second cell in the SUL communication manner; and
receiving, by the first UE, the scheduling information from the access network device, and sending the uplink information on the band of the second cell in the SUL communication manner based on the scheduling information.

21. A computer-readable storage medium, wherein the computer-readable storage medium stores a computer program or instructions, and when the computer program or the instructions are executed by a communication apparatus, the method according to any one of claims 1 to 10 is implemented, or the method according to any one of claims 11 to 18 is implemented.

22. A computer program product, wherein the computer program product comprises a computer program or instructions, and when the computer program or the instructions are executed by a communication apparatus, the method according to any one of claims 1 to 10 is implemented, or the method according to any one of claims 11 to 18 is implemented.

23. A communication system, comprising at least one access network device, wherein the access network device is configured to perform the method according to any one of claims 1 to 10.
